# EUROPEAN PATENT SPECIFICATION

(11) **EP 3 412 932 B1**
(45) Date of publication and mention of the grant of the patent: **10.06.2020**
(21) Application number: 17747475.6
(22) Date of filing: 01.02.2017
(51) Int. Cl.: F16H 9/18, F16H 25/20, F16H 63/06, F16H 57/04, F16H 57/02, F16H 63/30

(54) **ENGINE UNIT**
MOTOREINHEIT
UNITÉ DE MOTEUR

(30) Priority: 04.02.2016 JP 2016019973
(43) Date of publication of application: 12.12.2018
(73) Proprietor: Yamaha Hatsudoki Kabushiki Kaisha, Iwata-shi, Shizuoka 438-8501 (JP)
(72) Inventor: MURAYAMA, Takuji, Iwata-shi Shizuoka 438-8501 (JP); SEKIGUCHI, Naoki, Iwata-shi Shizuoka 438-8501 (JP)
(74) Representative: Stöckeler, Ferdinand
(86) International application number: PCT/JP2017/003658
(87) International publication number: WO 2017/135320

(56) References cited:
- JP-A- S5 986 748
- JP-A- 2004 251 391
- JP-A- 2009 203 999
- JP-A- 2012 225 443
- US-A1- 2007 026 982
- US-A1- 2012 100 944

## Description

### [Technical Field]

The present invention relates to an engine unit.

### [Background Art]

An engine unit including an electronically-controlled continuously variable transmission apparatus (ECVT) has been known (see JP 2007-10104 A). The electronically-controlled continuously variable transmission apparatus includes a continuously variable transmission and a rotational force conversion mechanism. The continuously variable transmission includes a primary pulley, a secondary pulley, and a dry belt. The dry belt is wound onto the primary pulley and the secondary pulley. The primary pulley rotates as a rotational force of the crankshaft is transmitted thereto. The secondary pulley rotates in accordance with the primary pulley so as to transmit the rotational force to a rear wheel. The primary pulley includes at least one primary movable sheave which is movable in the rotational axis direction. The rotational force conversion mechanism is configured to move the at least one primary movable sheave in the rotational axis direction of the primary movable sheave. The rotational force conversion mechanism continuously changes the winding diameter of the dry belt wound onto the primary pulley. Because the electronically-controlled continuously variable transmission apparatus is able to finely control the transmission ratio, the fuel consumption of the engine unit is improved.

In the dry belt, a slide portion in contact with the primary pulley and the secondary pulley is not to be lubricated by lubricant. The primary pulley, the secondary pulley, and the dry belt are provided in a dry space formed in a dry belt casing. The dry belt is made of, for example, rubber or synthetic resin. The dry belt tends to be deteriorated by heat. Meanwhile, a crankshaft member is provided in a lubrication space which is formed by a crankcase member and includes lubricant. The temperature of the crankcase member is high. To prevent the deterioration by heat, the dry belt is provided at a location remote from the crankcase member. The rotational force conversion mechanism is provided by utilizing a space between the crankcase member and the dry belt in the dry space.

JP 2009-203999 A describes V-belt type continuously variable transmission in which an axial directional movable side cylinder member for coaxially inserting an axial directional fixed side cylinder member is held by a flange part of a movable pulley half body via a bearing 122, and a stopper arranged in a transmission case is engaged with the outer periphery of the axial directional movable side cylinder member by checking rotation around the axis of a rotary shaft through allowing the movement in the axial direction of the axial directional movable side cylinder member.

### [Summary of Invention]

### [Technical Problem]

Recently, further improvement in the fuel consumption has been demanded in the engine unit including the electronically-controlled continuously variable transmission apparatus employing the dry belt. Furthermore, prevention of degradation of the dry belt by heat has also been demanded in the engine unit including the electronically-controlled continuously variable transmission apparatus employing the dry belt.

An object of the present invention is to provide an engine unit including an electronically-controlled continuously variable transmission apparatus employing a dry belt, in which the fuel consumption of the engine unit is improved while degradation of the dry belt by heat is prevented.
This object is achieved by an engine unit according to claim 1.

### [Solution to Problem]

The inventors of the subject application researched reasons of deterioration of fuel consumption in a known electronically-controlled continuously variable transmission apparatus employing a dry belt. As a result of the research, it was found that the deterioration was caused by mechanical loss in a rotational force conversion mechanism. The following will specifically describe this problem.

A large torque acts on the rotational force conversion mechanism. This rotational force conversion mechanism includes a rotating member and a relative moving member. The rotating member is rotatable by a transmitted rotational force. The relative moving member contact the rotating member and is moved by a rotational force of the rotating member in the direction along the rotational axis of the primary movable sheave, relative to the rotating member. On this account, a large torque acts on a conversion contact portion where the rotating member is in contact with the relative moving member. The conversion contact portion of the rotational force conversion mechanism is therefore required to be lubricated. Under this circumstance, a dedicated lubrication chamber, in which lubricant dedicated for lubrication of the conversion contact portion of the rotational force conversion mechanism is provided, is provided in a dry space in which the rotational force conversion mechanism is provided. A dedicated lubrication chamber casing forming the dedicated lubrication chamber is provided to be isolated from the dry space. The conversion contact portion of the rotational force conversion mechanism is provided in this dedicated lubrication chamber. To isolate the dedicated lubrication chamber from the dry space, sealing members are provided in the rotational force conversion mechanism. Friction occurs between a sealing member and a member in contact with the sealing member, due to rotation or sliding. This friction occurring between a sealing member and a member in contact with the sealing member functions as resistance. Because plural sealing members are provided, a mechanical loss quantity is large in the rotational force conversion mechanism due to the friction generated by the sealing members.

The inventors of the subject application noticed that the mechanical loss was decreased and the fuel consumption of the engine unit was improved by reducing the number of the sealing members provided in the rotational force conversion mechanism. The dedicated lubrication chamber is unnecessary when the conversion contact portion of the rotational force conversion mechanism is provided not in the dedicated lubrication chamber but in the lubrication space formed in the crankcase member so as to be exposed to the lubrication space. In this way, a sealing member for isolating the dedicated lubrication chamber from the dry space becomes unnecessary. To put it differently, the number of the sealing members provided in the rotational force conversion mechanism is reduced. Meanwhile, the crankshaft includes a crank web. The temperature of the crank web tends to be high. When the conversion contact portion of the rotational force conversion mechanism is arranged to be exposed to the lubrication space formed in the crankcase member, the heat of the crank web tends to be transmitted to the rotational force conversion mechanism, because the conversion contact portion of the rotational force conversion mechanism and the hot crank web are provided in the same lubrication space. When the heat is transmitted to the rotational force conversion mechanism, the heat tends to be transmitted from the rotational force conversion mechanism to the dry belt. In other words, the heat tends to be transmitted to the dry belt when the conversion contact portion of the rotational force conversion mechanism and the crank web are provided in the same lubrication space. In consideration of the suppression of deterioration of the dry belt by heat, it is difficult to employ the structure with fewer sealing members, in which the conversion contact portion of the rotational force conversion mechanism is provided in the lubrication space formed in the crankcase member to be exposed to the lubrication space.

However, in order to prioritize fuel consumption, the inventors of the subjection application employed the structure with fewer sealing members in the rotational force conversion mechanism. When the structure with fewer sealing members was employed in the rotational force conversion mechanism, it was found that the deterioration of the dry belt by heat was not significant. After a detailed examination, it was found that, in the crankcase member, as compared to a region in the vicinity of the crank web of the crankshaft member, the temperature of a region remote from the crank web was relatively low. The inventors noticed to provide the rotational force conversion mechanism at a position not overlapping the rotation range of the crank web when viewed in the rotational axis direction of the crankshaft, or at a position not overlapping the rotation range of the crank web when viewed in any direction orthogonal to the direction of the rotational axis of the crankshaft. The rotational axis of the crankshaft indicates the rotational axis of the crankshaft member. It was found that deterioration of the belt by heat was restrained to the same degree as in the known electronically-controlled continuously variable transmission apparatuses.

According to the present invention, an engine unit includes: an engine main body unit which includes a crankcase member forming a lubrication space in which lubricant is provided and a crankshaft member provided in the lubrication space and including a crank web; and an electronically-controlled continuously variable transmission apparatus including: (1) a continuously variable transmission including: a primary pulley which is rotatable in accordance with rotation of the crankshaft member and includes at least one primary movable sheave movable in a rotational axis direction; a secondary pulley; a dry belt which is wound onto the primary pulley and the secondary pulley and has a slide portion which is in contact with the primary pulley and the secondary pulley and is not lubricated by the lubricant; and a dry belt casing which forms a dry space in which the primary pulley, the secondary pulley, and the dry belt are provided, a primary rotational axis which is the rotational axis of the at least one primary movable sheave being on the same line as or being parallel to a crank rotational axis which is the rotational axis of the crankshaft member; (2) a rotational force transmission mechanism which is configured to transmit a rotational force of an electric motor; and (3) a rotational force conversion mechanism configured to move the at least one primary movable sheave in the direction of the primary rotational axis and includes (a) a rotating member which is rotatable by the rotational force transmitted from the rotational force transmission mechanism and (b) a relative moving member which is in contact with the rotating member and is movable by the rotational force of the rotating member in the direction of the primary rotational axis relative to the rotating member, the rotational force conversion mechanism being provided (i) at a position not overlapping a rotation range of the crank web when viewed in the direction of the crank rotational axis, and/or (ii) at a position not overlapping the rotation range of the crank web when viewed in any direction orthogonal to the direction of the crank rotational axis, and a conversion contact portion where the relative moving member and the rotating member contact each other, being provided in the lubrication space formed by the crankcase member to be exposed to the lubrication space.

According to this arrangement, the engine unit includes the engine main body unit and the electronically-controlled continuously variable transmission apparatus.
The engine main body unit includes the crankcase member and the crankshaft member. The crankcase member forms the lubrication space in which lubricant is provided. The crankshaft member is provided in the lubrication space. The crankshaft member includes the crank web. In this specification, the lubrication space is a space where lubricant is provided, and components provided in the space are to be lubricated by the lubricant. Examples of the lubricant include oil and grease.

The electronically-controlled continuously variable transmission apparatus includes (1) the continuously variable transmission, (2) the rotational force transmission mechanism, and (3) the rotational force conversion mechanism. (1) The continuously variable transmission includes the primary pulley, the secondary pulley, the dry belt, and the dry belt casing. The primary pulley is rotatable in accordance with the rotation of the crankshaft member. The primary pulley includes at least one primary movable sheave which is movable in the rotational axis direction. The dry belt is wound onto the primary pulley and the secondary pulley. In the dry belt, a slide portion in contact with the primary pulley and the secondary pulley is not to be lubricated by lubricant. The dry belt casing forms a dry space. The primary pulley, the secondary pulley, and the dry belt are provided in the dry space. The continuously variable transmission is provided so that a primary rotational axis is on the same line as or parallel to a crank rotational axis. The primary rotational axis is a rotational axis of the primary movable sheave. The crank rotational axis is a rotational axis of the crankshaft member. (2) The rotational force transmission mechanism is configured to transmit the rotational force of the electric motor. (3) The rotational force conversion mechanism includes (a) the rotating member and (b) the relative moving member, (a) The rotating member is rotatable by the rotational force transmitted from the rotational force transmission mechanism. (b) The relative moving member is in contact with the rotating member. The relative moving member is arranged to be movable relative to the rotating member in the direction along the primary rotational axis, on account of the rotational force of the rotating member. To put it differently, the relative moving member itself may be arranged not to be movable in the direction along the primary rotational axis. The rotational force conversion mechanism is configured to move the primary movable sheave in the direction along the primary rotational axis.

The rotational force conversion mechanism is provided (i) not to overlap the rotation range of the crank web when viewed in the direction along the crank rotational axis. Alternatively, the rotational force conversion mechanism is provided (ii) not to overlap the rotation range of the crank web when viewed in any direction orthogonal to the crank rotational axis. In other words, the rotational force conversion mechanism is provided at a location remote from the crank web which is hot. On this account, the primary movable sheave which is moved in the direction along the primary rotational axis by the rotational force conversion mechanism is provided at a location remote from the crank web. The dry belt wound onto the primary pulley is therefore provided at a location remote from the crank web. The temperature decreases away from the crank web. On this account, deterioration of the dry belt by heat is restrained.

In addition to the above, the conversion contact portion where the relative moving member and the rotating member contact each other, is provided in the lubrication space formed by the crankcase member so as to be exposed to the lubrication space. In this specification, when a conversion contact portion is exposed to the lubrication space formed by the crankcase member, the space in which the conversion contact portion is provided is not isolated in the lubrication space. In other words, the conversion contact portion is lubricated by the lubricant in the lubrication space formed by the crankcase member. A large torque acts on the conversion contact portion at the time of shifting. The conversion contact portion is therefore required to be lubricated by lubricant. For this reason, the conversion contact portion which is provided to be exposed to the lubrication space formed by the crankcase member is lubricated by the lubricant in the lubrication space. It is therefore unnecessary to additionally provide, in the dry belt casing forming the dry space, a dedicated lubrication chamber casing forming a dedicated lubrication chamber in which the conversion contact portion is provided. To put it differently, a sealing member for isolating the dedicated lubrication chamber from the dry space is unnecessary. Therefore the number of the sealing members provided in the engine unit can be reduced. The mechanical loss on account of the sealing members can therefore be reduced. Therefore the fuel consumption can be further improved. As described above, in the engine unit of the present invention, the fuel consumption can be further improved while the degradation of the dry belt by heat is prevented.

According to an embodiment of the present invention, the above-described engine unit is arranged so that the rotational force conversion mechanism is provided in the lubrication space formed by the crankcase member to be exposed to the lubrication space.

According to this arrangement, the rotational force conversion mechanism is provided in the lubrication space so as to be exposed to the lubrication space formed by the crankcase member. To put it differently, a space where the rotational force conversion mechanism is provided is not isolated in the lubrication space. The rotational force conversion mechanism is lubricated by the lubricant in the lubrication space. A large torque acts on the conversion contact portion of the rotational force conversion mechanism. The conversion contact portion is therefore required to be lubricated by lubricant. For this reason, the conversion contact portion of the rotational force conversion mechanism, which is provided to be exposed to the lubrication space formed by the crankcase member, is lubricated by the lubricant in the crankcase member. It is therefore unnecessary to additionally provide, in the dry belt casing forming the dry space, a dedicated lubrication chamber in which the rotational force conversion mechanism is provided. To put it differently, a sealing member for isolating the dedicated lubrication chamber from the dry space is unnecessary. In this way, the number of the sealing members provided in the engine unit can be further reduced. The mechanical loss on account of the sealing members can therefore be reduced. Because of the above, the fuel consumption of the engine unit of the present invention can be further improved.

According to an embodiment of the present invention, the above-described engine unit is arranged so that the rotational force transmission mechanism includes a rotating member gear which is engaged with the rotating member of the rotational force conversion mechanism and is rotatable by the rotational force of the electric motor, and the rotating member gear is provided in the lubrication space formed by the crankcase member to be exposed to the lubrication space.

According to this arrangement, the rotational force transmission mechanism includes the rotating member gear engaged with the rotating member of the rotational force conversion mechanism. The rotating member gear is rotatable by the rotational force of the electric motor. The rotating member gear is provided in the lubrication space formed by the crankcase member so as to be exposed to the lubrication space. A space where the rotating member gear is provided is not isolated in the lubrication space. In this connection, bearing portions supporting the respective ends of the rotational shaft of the rotating member gear are required to be lubricated by lubricant. The bearing portions of the rotating member gear are to be lubricated by the lubricant in the lubrication space formed by the crankcase member. It is therefore unnecessary to additionally provide, in the dry belt casing forming the dry space, a dedicated lubrication casing which forms a dedicated lubrication chamber in which the bearing portions of the rotational shaft of the rotating member gear are provided. To put it differently, a sealing member for isolating the dedicated lubrication chamber from the dry space is unnecessary. In this way, the number of the sealing members provided in the engine unit can be further reduced. The mechanical loss on account of the sealing members can therefore be further reduced. Because of the above, the fuel consumption of the engine unit of the present invention can be further improved.

According to an embodiment of the present invention, the above-described engine unit is arranged such that the rotating member gear is made of metal.

According to this arrangement, the rotating member gear is made of metal. Metal is higher in strength than resin. The durability of the engine unit can therefore be improved. Furthermore, as compared to cases where the rotating member gear is made of resin, the rotating member gear can be reduced in size. Furthermore, as compared to cases where the rotating member gear is made of resin, the rotational force transmission mechanism can be reduced in size. Increase in size of the engine unit is therefore restrained.

According to an embodiment of the present invention, the above-described engine unit is arranged so that the rotational force transmission mechanism includes a rotational force transmission gear mechanism which includes at least one gear configured to transmit the rotational force of the electric motor to the rotating member gear, and at least part of the at least one gear included in the rotational force transmission gear mechanism is provided in the lubrication space formed by the crankcase member to be exposed to the lubrication space.

According to this arrangement, the rotational force transmission mechanism includes the rotational force transmission gear mechanism. The rotational force transmission gear mechanism includes at least one gear configured to transmit the rotational force of the electric motor to the rotating member gear. The at least part of at least one gear included in the rotational force transmission gear mechanism is provided in the lubrication space formed by the crankcase member so as to be exposed to the lubrication space. In the lubrication space, the space in which the at least part of at least one gear of the rotational force transmission gear mechanism is not isolated, In this connection, bearing portions supporting the respective ends of the rotational shaft of the gears in the rotational force transmission gear mechanism are required to be lubricated by lubricant. The bearing portions of the gears in the rotational force transmission gear mechanism are to be lubricated by the lubricant in the lubrication space. It is therefore unnecessary to additionally provide, in the dry belt casing forming the dry space, a dedicated lubrication casing which forms a dedicated lubrication chamber in which the bearing portions of the rotational shaft of the at least part of at least one gear of the rotational force transmission gear mechanism are provided. To put it differently, a sealing member for isolating the dedicated lubrication chamber from the dry space is unnecessary. In this way, the number of the sealing members provided in the engine unit can be further reduced. The mechanical loss on account of the sealing members can therefore be further reduced. Because of the above, the fuel consumption of the engine unit of the present invention can be further improved.

According to an embodiment of the present invention the above-described engine unit is arranged so that the at least part of the at least one gear included in the rotational force transmission gear mechanism is made of metal.

According to this arrangement, the at least part of at least one gear included in the rotational force transmission gear mechanism is made of metal. Metal is higher in strength than resin. The durability of the engine unit can therefore be improved. Furthermore, as compared to cases where at least one gear in the rotational force transmission gear mechanism is made of resin, the at least part of at least one gear in the rotational force transmission gear mechanism can be reduced in size. Furthermore, as compared to cases where at least one gear in the rotational force transmission gear mechanism is made of resin, the rotational force transmission mechanism can be reduced in size. Increase in size of the engine unit is therefore restrained.

According to an embodiment of the present invention, the above-described engine unit is arranged so that the rotational force transmission mechanism is provided in the lubrication space formed by the crankcase member to be exposed to the lubrication space.

According to this arrangement, the rotational force transmission mechanism is provided in the lubrication space so as to be exposed to the lubrication space formed by the crankcase member. A space where the rotational force transmission mechanism is provided is not isolated in the lubrication space. The rotational force transmission mechanism is lubricated by the lubricant in the lubrication space. It is therefore unnecessary to additionally provide, in the dry belt casing forming the dry space, a dedicated lubrication chamber in which the rotational force transmission mechanism is provided. To put it differently, a sealing member for isolating the dedicated lubrication chamber from the dry space is unnecessary. In this way, the number of the sealing members provided in the engine unit can be further reduced. The mechanical loss on account of the sealing members can therefore be further reduced. Because of the above, the fuel consumption of the engine unit of the present invention can be further improved.

According to an embodiment of the present invention, the above-described engine unit is arranged so that the primary rotational axis of the at least one primary movable sheave is provided on the same line as the crank rotational axis of the crankshaft member, and a primary shaft portion to which the at least one primary movable sheave is attached is integrated with the crankshaft member.

According to this arrangement, the primary rotational axis is provided on the same line as the crank rotational axis. Furthermore, the primary shaft portion to which the primary movable sheave is attached is integrated with the crankshaft member. In this specification, when the primary shaft portion is integrated with the crankshaft member, the primary shaft portion and the crankshaft member may be molded to form a single structure, Alternatively, when the primary shaft portion is integrated with the crankshaft member, the primary shaft portion and the crankshaft member may be molded as different structures and the primary shaft portion and the crankshaft member may be connected to each other and combined. It is therefore possible to provide the rotational force conversion mechanism and the rotational force transmission mechanism around the primary shaft portion. In other words, the rotational force conversion mechanism and the rotational force transmission mechanism can be provided at a location remote from the crank web which is hot. The primary movable sheave is provided at a location remote from the crank web. The dry belt wound onto the primary pulley is therefore provided at a location remote from the crank web. The temperature decreases away from the crank web. On this account, the deterioration of the dry belt by heat is restrained. Furthermore, the rotational force conversion mechanism and the rotational force transmission mechanism can be compactly disposed. Increase in size of the engine unit is therefore restrained.

According to an embodiment of the present invention, the above-described engine unit is arranged so that the primary rotational axis of the at least one primary movable sheave is provided to be parallel to the crank rotational axis of the crankshaft member, and a primary shaft portion to which the at least one primary movable sheave is attached is connected to the crankshaft member by a power transmission gear.

According to this arrangement, the primary rotational axis of the primary movable sheave is provided to be parallel to the crank rotational axis of the crankshaft member. Furthermore, the primary shaft portion to which the primary movable sheave is attached is connected to the crankshaft member by the power transmission gear. It is therefore possible to provide the rotational force conversion mechanism around the primary shaft portion. Furthermore, it is possible to provide the rotational force transmission mechanism between the crankshaft member and the primary shaft portion. In other words, the rotational force conversion mechanism and the rotational force transmission mechanism can be provided at a location remote from the crank web which is hot. The primary movable sheave is provided at a location remote from the crank web. The dry belt wound onto the primary pulley is therefore provided at a location remote from the crank web. The temperature decreases away from the crank web. On this account, the deterioration of the dry belt by heat is restrained. It is therefore possible to improve the degree of freedom in disposition of the rotational force transmission mechanism. Increase in size of the engine unit is therefore restrained.

According to an embodiment of the present invention, the above-described engine unit further includes a moving distance detection unit which includes a contact portion in contact with the rotational force conversion mechanism and is configured to detect a moving distance of the relative moving member in the direction of the primary rotational axis relative to the rotating member, at least the contact portion of the moving distance detection unit being provided so as to be exposed to the lubrication space formed by the crankcase member.

According to this arrangement, the engine unit includes the moving distance detection unit which is configured to detect the moving distance of the relative moving member. The moving distance is the distance of movement of the relative moving member in the direction of the primary rotational axis relative to the rotating member. The moving distance detection unit has the contact portion which is in contact with the rotational force conversion mechanism. At least the contact portion of the moving distance detection unit is provided in the lubrication space formed by the crankcase member so as to be exposed to the lubrication space. This smoothens the movement of the contact portion where the moving distance detection unit is in contact with the rotational force conversion mechanism. Because the moving distance detection unit and the rotational force conversion mechanism smoothly operate, the accuracy of the moving distance detection unit is improved. Furthermore, because the contact portion is lubricated by lubricant, wear resistance is improved, degradation over time is restrained, and accuracy of the moving distance detection unit is improved.

According to an embodiment of the present invention, the above-described engine unit is arranged such that the rotational force conversion mechanism is either a screw mechanism or a cam mechanism.

According to this arrangement, the rotational force conversion mechanism is a screw mechanism. The screw mechanism may be constituted by an inner screw and an outer screw which covers the inner screw and is engaged with the inner screw. The screw mechanism may be constituted by a ball screw and a ball screw shaft engaged with the ball screw. The screw mechanism may be constituted by a spline nut and a spline shaft engaged with the spline nut. Alternatively, the rotational force conversion mechanism is a cam mechanism. The cam mechanism may be, for example, constituted by a rotating cam and a cam follower which makes contact with the cam and slides. The cam mechanism may, for example, be constituted of a cylindrical cam having a groove portion and a cam follower inserted into the groove portion.

According to an embodiment of the present invention, the above-described engine unit is arranged such that the conversion contact portion and the crankshaft member are lubricated by shared lubricant.

When the lubricant by which the conversion contact portion is lubricated is different from the lubricant by which the crankshaft member is lubricated, it is necessary to provide a sealing member to isolate the conversion contact portion from the crankcase member in order to prevent the lubricants from being mixed. According to this arrangement, the conversion contact portion and the crankshaft member are to be lubricated by shared lubricant. To put it differently, a sealing member for isolating the conversion contact portion from the crankcase member is unnecessary. Therefore the number of the sealing members provided in the engine unit can be reduced. The mechanical loss on account of the sealing members can therefore be reduced. Because of the above, the fuel consumption of the engine unit of the present invention can be further improved.

According to an embodiment of the present invention, the above-described engine unit is arranged such that the shared lubricant is oil.

According to this arrangement, the shared lubricant is oil. Oil is lower in viscosity than grease. The oil can therefore widely spread over the lubrication space. The conversion contact portion and the crankshaft member in the lubrication space can be easily lubricated for this reason.

The rotating member may rotate about a linear line which is identical with or parallel to the primary rotational axis.

In this specification, the lubrication space is a space where lubricant is provided and is a space where components provided therein are to be lubricated by the lubricant.

In this specification, when a component is exposed to the lubrication space formed by the crankcase member, the space in which the component is provided is not isolated in the lubrication space.

In this specification, the rotation range of the crank web is a region in which the rotating crank web is exactly settled. When there are plural crank webs, the rotation range of the crank webs is the maximum region which encompasses the rotating crank webs and a connection part connecting the crank webs.

In this specification, the slide portion of the dry belt is a part where the dry belt is in contact with and slides on the primary pulley and the secondary pulley.

In this specification, when the primary shaft portion is integrated with the crankshaft member, the primary shaft portion and the crankshaft member may be molded to form a single structure. Alternatively, when the primary shaft portion is integrated with the crankshaft member, the primary shaft portion and the crankshaft member may be molded as different structures and the primary shaft portion and the crankshaft member may be connected to each other and combined.

In this specification, the width of the primary pulley indicates the width of a groove formed by the primary movable sheave and the primary fixed sheave.

In the present invention, an end portion of a member indicates a portion constituted by an end and its surroundings of the member.

In this specification, an expression "members A and B are provided side by side in an X direction" indicates the following state. When members A and B are viewed in a direction orthogonal to the X direction, members A and B are both provided on a linear line which is parallel to the X direction. In the present invention, an expression "members A and B are provided side by side in an X direction when viewed in a Y direction" indicates the following state. When members A and B are viewed in the Y direction, members A and B are both provided on a linear line which is parallel to the X direction. In this regard, when members A and B are viewed in a W direction which is different from the Y direction, at least one of members A or B may not be provided on the linear line which is parallel to the X direction. Members A and B may be in contact with each other. Members A and B may not be in contact with each other. A member C may be provided between members A and B.

In this specification, an expression "a member A is provided in front of a member B" indicates the following state. Members A and B are lined up in the front-rear direction and a part of member A, the part facing member B, is provided in front of member B. According to this definition, when a part of the front surface of member B, the part facing member A, is the front-most end of member B, member A is provided forward of member B. According to the definition, when a part of the front surface of member B, the part facing member A, is not the front-most end of member B, member A may or may not be provided forward of member B. This applies to the directions other than the front-rear direction. (That is to say, this applies to the directions other than "in front of', such as "behind", "straight below", "to the left of", and "to the right of".) The front surface of member B is a surface which is viewable when member B is viewed from the front side. Depending on the shape of member B, the front surface of member B may be formed of plural surfaces, instead of a single continuous surface.

In this specification, an expression "a member A is provided in front of a member B in the left-right direction" indicates the following state. Members A and B are lined up in the front-rear direction when viewed in the left-right direction and a part of member A, the part facing member B, is provided in front of member B when viewed in the left-right direction. According to this definition, members A and B may not be lined up in the front-rear direction in three dimensions. This applies to the directions other than the front-rear direction. (That is to say, this applies to the directions other than "in front of", such as "behind", "straight below", "to the left of", and "to the right of".)

The technical terms in this specification are used only for defining a specific embodiment, and are not used with the intention of restricting the present invention. The term "and/or" used in this specification encompasses any or all combinations of one constituted feature or plural related constituent features which are listed.

In this specification, the use of the terms "including", "comprising", "having" and their derivatives specify the existence of a feature, a step, an operation, an element, a component, and/or their equivalents, which are described in this specification, but may encompass one or more of a step, an action, an element, a component, and/or a group of each of them. In this specification, the terms "attached", "connected", "coupled", and/or their equivalents are broadly used and encompass both direct and indirect attachment, connection, and coupling. Furthermore, the terms "connected" and "coupled" are not limited to physical or mechanical connection and coupling, and indicate direct or indirect electrical connection or coupling.

Unless otherwise defined, all terms (technical and scientific terms) used in this specification indicate meanings typically understood by a person with ordinary skill in the art in the technical field to which the present invention belongs. Terms defined in typical dictionaries indicate meanings used in related technologies and in the context of the present disclosure. Unless otherwise clearly defined, the terms are not interpreted ideally or excessively formally.

In the description below, many specific details will be given to achieve full understanding of the present invention, for the purpose of explanation. It is, however, evident that a person with ordinary skill in the art is able to implement the present invention without such specific details. The disclosure should be considered as an example of the present invention, and does not intend to restrict the present invention to a specific embodiment which is described below with reference to the drawings.

### [Advantageous Effects]

According to the present invention, it is possible to provide an engine unit including an electronically-controlled continuously variable transmission apparatus employing a dry belt, in which the fuel consumption of the engine unit is improved while degradation of the dry belt by heat is prevented.

### [Brief Description of Drawings]

[FIG. 1] FIG. 1 is a left side view of a motorcycle of an embodiment.
[FIG. 2] FIG. 2 is a left side view of a part of an engine unit of the embodiment.
[FIG. 3] FIG. 3 is a left side view of an electronically-controlled continuously variable transmission apparatus of the embodiment.
[FIG. 4] FIG. 4 is a cross section taken along the I-I line in FIG. 2.
[FIG. 5] FIG. 5 is a cross section taken along the II-II line in FIG. 2.
[FIG. 6] FIG. 6 is an exploded perspective view of an electronically-controlled continuously variable transmission apparatus of the embodiment.
[FIG. 7] FIG. 7(a) is a cross section of the electronically-controlled continuously variable transmission apparatus of the embodiment, whereas FIG. 7(b) is a cross section of an electronically-controlled continuously variable transmission apparatus of Comparative Example.
[FIG. 8] Each of FIGs. 8(a) to 8(c) is a schematic cross section of a modification of the electronically-controlled continuously variable transmission apparatus of the embodiment.
[FIG. 9] Each of FIGs. 9(a) and 9(b) is a schematic cross section of a modification of the electronically-controlled continuously variable transmission apparatus of the embodiment.
[FIG. 10] FIG. 10 is a schematic cross section of a modification of the electronically-controlled continuously variable transmission apparatus of the embodiment.
[FIG. 11] Each of FIGs. 11(a) to 11(c) is a schematic partial cross section of a modification of the electronically-controlled continuously variable transmission apparatus of the embodiment.
[FIG. 12] Each of FIGs. 12(a) to 12(c) is a schematic left side view of a modification of the electronically-controlled continuously variable transmission apparatus of the embodiment.
[FIG. 13] FIGs. 13(a) and 13(b) show a modification of the rotational force conversion mechanism of the embodiment. FIG. 13(a) is a left side view, whereas FIG. 13(b) is a cross section.
[FIG. 14] FIG. 14 is a schematic cross section of a modification of the primary pulley of the present invention.
[FIG. 15] FIG. 15 is a schematic diagram of the engine unit of the embodiment.

### [Description of Embodiments]

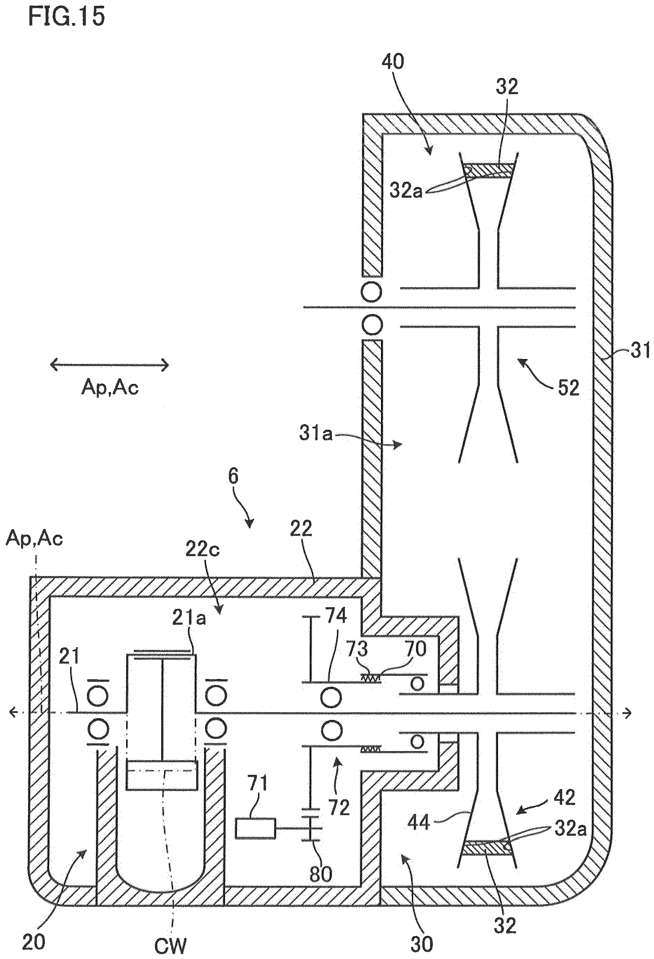

The following describes an embodiment of the present invention with reference to FIG. 15. An engine unit 6 includes an engine main body unit 20 and an electronically-controlled continuously variable transmission apparatus 30.

The engine main body unit 20 includes a crankcase member 22 and a crankshaft member 21. The crankcase member 22 forms a lubrication space 22c in which lubricant is provided. The crankshaft member 21 is provided in the lubrication space 22c. The crankshaft member 21 includes a crank web 21a.

The electronically-controlled continuously variable transmission apparatus 30 includes a continuously variable transmission 40, a rotational force transmission mechanism 80, and a rotational force conversion mechanism 72. The continuously variable transmission 40 includes a primary pulley 42, a secondary pulley 52, a dry belt 32, and a dry belt casing 31. The primary pulley 42 is rotatable in accordance with the rotation of the crankshaft member 21. The primary pulley 42 includes at least one primary movable sheave 44 which is movable in the rotational axis direction. The dry belt 32 is wound onto the primary pulley 42 and the secondary pulley 52. In the dry belt 32, a slide portion 32a in contact with the primary pulley 42 and the secondary pulley 52 is not to be lubricated by lubricant. The dry belt casing 31 forms a dry space 31a. The primary pulley 42, the secondary pulley 52, and the dry belt 32 are provided in a dry space 31a. The continuously variable transmission 40 is provided so that a primary rotational axis Ap is on the same line as or parallel to a crank rotational axis Ac. The primary rotational axis Ap is a rotational axis of the primary movable sheave 44. The crank rotational axis Ac is a rotational axis of the crankshaft member 21.

The rotational force transmission mechanism 80 is configured to transmit the rotational force of an electric motor 71. The rotational force conversion mechanism 80 includes a rotating member 74 and a relative moving member 73. The rotating member 74 is rotatable by a rotational force transmitted from the rotational force transmission mechanism 80. The relative moving member 73 is in contact with the rotating member 74. The relative moving member 73 is arranged to be movable relative to the rotating member 74 in the direction along the primary rotational axis Ap, on account of the rotational force of the rotating member 74. The rotational force conversion mechanism 72 is configured to move the primary movable sheave 44 in the direction along the primary rotational axis Ap.

The rotational force conversion mechanism 72 is provided not to overlap a rotation range CW of the crank web 21a when viewed in the direction along the crank rotational axis Ac. The rotational force conversion mechanism 72 is provided not to overlap the rotation range CW of the crank web 21a when viewed in any direction orthogonal to the crank rotational axis Ac.

A conversion contact portion 70 where the relative moving member 73 and the rotating member 74 contact each other, is provided in the lubrication space 22c formed by the crankcase member 22 so as to be exposed to the lubrication space 22c. To put it differently, the conversion contact portion 70 is lubricated by the lubricant in the lubrication space 22c.

The engine unit 6 of the present embodiment has the following characteristics.

The rotational force conversion mechanism 72 is provided at a location remote from the crank web 21a which is hot. On this account, the primary movable sheave 44 which is moved in the direction along the primary rotational axis Ap by the rotational force conversion mechanism 72 is provided at a location remote from the crank web 21a. The dry belt 32 wound onto the primary pulley 42 is therefore provided at a location remote from the crank web 21a. The temperature decreases away from the crank web 21a. In this way, the deterioration of the dry belt 32 by heat is restrained.

A large torque acts on the conversion contact portion 70 at the time of shifting. The conversion contact portion 70 is therefore required to be lubricated by lubricant. For this reason, the conversion contact portion 70 which is provided to be exposed to the lubrication space 22c formed by the crankcase member 22 is lubricated by the lubricant in the lubrication space 22c. It is therefore unnecessary to additionally provide, in the dry belt casing 31 forming the dry space 31a, a dedicated lubrication chamber casing forming a dedicated lubrication chamber in which the conversion contact portion 70 is provided. To put it differently, a sealing member for isolating the dedicated lubrication chamber from the dry space 31a is unnecessary. In this way, the number of the sealing members provided in the engine unit 6 can be reduced. The mechanical loss on account of the sealing members can therefore be reduced. Therefore the fuel consumption of the engine unit 6 can be further improved.

As described above, in the engine unit 6 of the present invention, the fuel consumption can be further improved while degradation of the dry belt 32 by heat is prevented.

The following describes a specific embodiment of the present invention. A motorcycle 1 of the present embodiment is an example of a vehicle on which an engine unit of the present invention is mounted. Hereinafter, a front-rear direction is a vehicle front-rear direction for a rider seated on a below-described seat 8 of the motorcycle 1. A left-right direction is a vehicle left-right direction (vehicle width direction) for the rider seated on the seat 8. In each figure related to the present embodiment, arrows F, B, U, D, L, and R indicate forward, rearward, upward, downward, leftward, and rightward, respectively. The specific embodiment described below encompasses the entirety of the embodiment shown in FIG. 15. It is noted that items identical with those in the embodiment shown in FIG. 15 are indicated by the same reference numerals.

### [Overall Structure of Motorcycle]

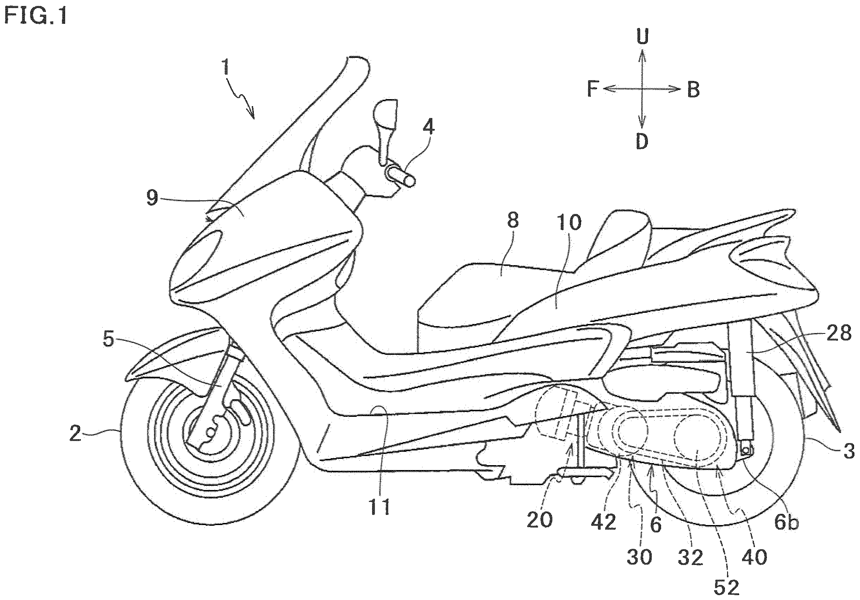

The following describes the overall structure of the motorcycle 1 with reference to FIG. 1.

The motorcycle 1 includes a front wheel 2, a rear wheel 3, and a vehicle body frame (not illustrated). The vehicle body frame is an underbone-type vehicle body frame. The vehicle body frame includes a head pipe (not illustrated) at a front portion. A steering shaft (not illustrated) is rotatably inserted into the head pipe. An upper end portion of the steering shaft is connected to a handle unit 4. Upper end portions of paired front forks 5 are secured to the handle unit 4. A lower end portion of each front fork 5 supports the front wheel 2.

An engine unit 6 is supported by the vehicle body frame to be swingable. The engine unit 6 is provided below a later-described seat 8. A rear end portion of the engine unit 6 supports the rear wheel 3. The engine unit 6 is connected to one end portion of a rear suspension 28 at a boss portion 6b. The other end portion of the rear suspension 28 is connected to the vehicle body frame.

The seat 8 is supported at an upper part of the vehicle body frame. An upper part of each front fork 5 is covered with a front cover 9. Side covers 10 are provided directly below the seat 8. Step boards 11 are provided between the front cover 9 and the side covers 10. The step boards 11 are provided on the left and right sides of a lower part of the motorcycle 1.

A fuel tank (not illustrated) is provided directly below the seat 8. The vehicle body frame supports a battery (not illustrated) which is configured to supply power to electronic apparatuses such as sensors and a controller (not illustrated). The controller controls operations of components of the motorcycle 1.

The engine unit 6 includes an engine main body unit 20 and an electronically-controlled continuously variable transmission apparatus 30. The electronically-controlled continuously variable transmission apparatus 30 includes a continuously variable transmission 40. The continuously variable transmission 40 includes a primary pulley 42 and a secondary pulley 52. The primary pulley 42 is provided in front of the secondary pulley 52. The continuously variable transmission 40 includes a dry belt 32 wound onto the primary pulley 42 and the secondary pulley 52.

The handle unit 4 includes an accelerator grip and a brake lever which are not illustrated. The throttle grip is operated for adjusting the output of the engine. The brake lever is operated for braking the rotation of the front wheel 2. The handle unit 4 is provided with switches such as a main switch.

### [Overall Structure of Engine Unit]

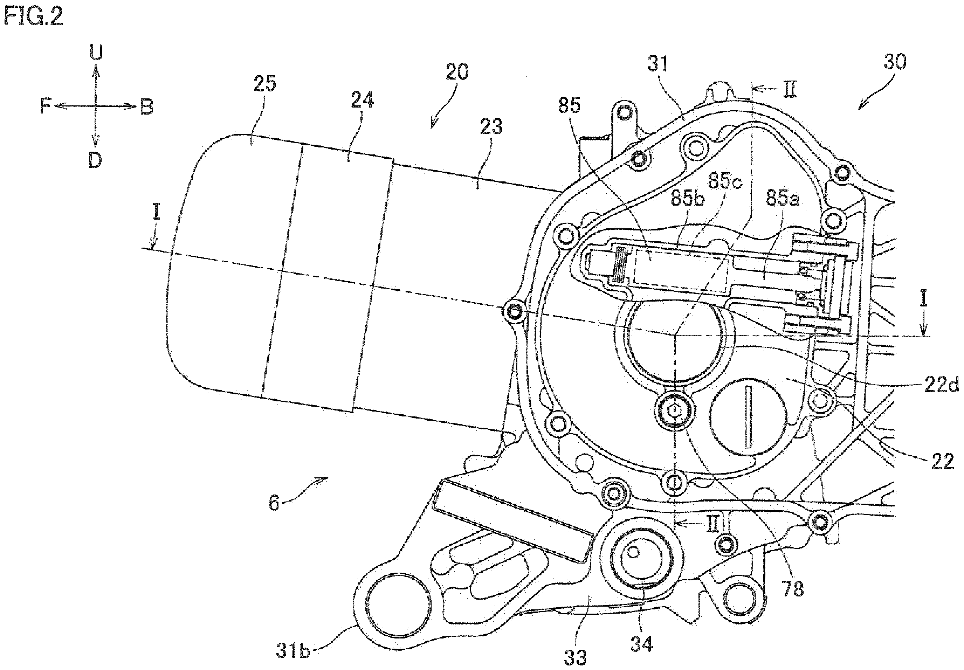

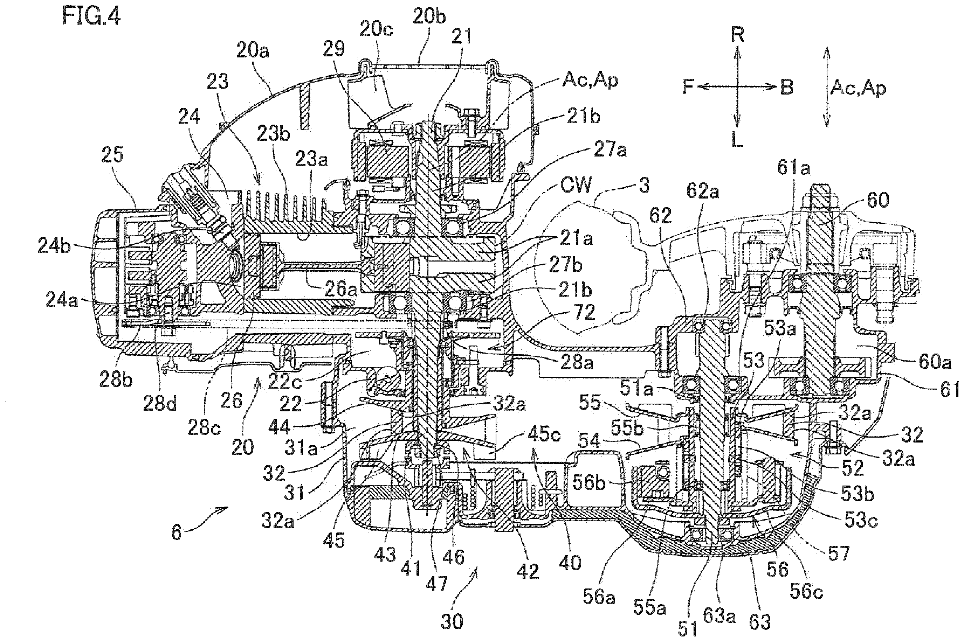

The engine unit 6 will be described with reference to FIG. 2 and FIG. 4. It is noted that FIG. 2 does not show the crankshaft member 21 and the continuously variable transmission 40.

The engine unit 6 includes the engine main body unit 20 and the electronically-controlled continuously variable transmission apparatus 30. The electronically-controlled continuously variable transmission apparatus 30 is configured to transmit the power of the engine main body unit 20 to the rear wheel 3.

### [Structure of Engine Main Body Unit]

The following will describe the engine main body unit 20. The engine main body unit 20 is a single-cylinder engine including one cylinder. The engine main body unit 20 is a four-stroke single-cycle engine which repeats an intake process, a compression process, a combustion process (expansion process), and an exhaust process.

The engine main body unit 20 includes a crankshaft member 21, a crankcase member 22, a cylinder body 23, a cylinder head 24, and a head cover 25. The head cover 25 forms a front portion of the engine unit 6. The crankcase member 22 forms a lubrication space 22c in which lubricant is provided. The lubricant is oil. The crankshaft member 21 is provided in the lubrication space 22c. The cylinder head 24 is connected to a rear end portion of the head cover 25. The cylinder body 23 is connected to a rear end portion of the cylinder head 24.

The engine main body unit 20 is a forced air-cooled engine. The engine main body unit 20 includes a shroud 20a. The shroud 20a covers the whole circumferences of the cylinder body 23 and the cylinder head 24. The shroud 20a covers a right side portion of the crankcase member 22. An air inlet 20b is formed in a right part of the shroud 20a. An air outlet (not illustrated) is formed at a front portion of the shroud 20a. The right end portion of the later-described crankshaft member 21 protrudes from the crankcase member 22 and is connected to a cooling fan 20c. The cooling fan 20c is rotationally driven in accordance with the rotation of the crankshaft member 21. Air is introduced into the shroud 20a through the air inlet 20b by the drive of the cooling fan 20c. As the air introduced into the shroud 20a makes contact with later-described cooling fins 23b of the cylinder body 23, the cylinder body 23 radiates heat. The air introduced into the shroud 20a is exhausted through the air outlet.

A cylinder hole 23a is formed in the cylinder body 23. The central axis of the cylinder hole 23a is the cylinder axial line. The engine main body unit 20 is mounted on the vehicle body frame, with the cylinder axial line significantly leaning forward. The inclination angle of the cylinder axial line with respect to the horizontal direction is 0 degree or more and 45 degrees or less. A piston 26 is slidably housed in the cylinder hole 23a. A combustion chamber 24a is formed by a lower surface of the cylinder head 24, the cylinder hole 23a, and the piston 26. An ignition device 24b is provided at the cylinder head 24. The ignition device 24b is configured to ignite a mixture gas of fuel and air in the combustion chamber 24a.

The crankshaft member 21 includes two crank webs 21a and two crank main shaft portions 21b. The two crank webs 21a are provided between the two crank main shaft portions 21b. The two crank webs 21a are connected to each other by an eccentric shaft (not illustrated). The axial center of the eccentric shaft is eccentric from the rotational center of the crankshaft member 21. The eccentric shaft of the crankshaft member 21 is connected to the piston 26 via a connecting rod 26a. A bearing 27a is provided to the right of the right crank web 21a. A bearing 27b is provided to the left of the left crank web 21a. The crankshaft member 21 is supported by the crankcase member 22 via the bearing 27a and the bearing 27b. A driving cam chain sprocket 28a is fitted to the crankshaft member 21. A driven cam chain sprocket 28b is provided at the cylinder head 24. A cam chain 28c is provided to bridge the driving cam chain sprocket 28a and the driven cam chain sprocket 28b. The driven cam chain sprocket 28b is attached to a valve driving camshaft 28d. The rotational force of the crankshaft member 21 is transmitted to the valve driving camshaft 28d via the cam chain 28c. In sync with the crankshaft member 21, the valve driving camshaft 28d opens and closes an intake valve and an exhaust valve which are not illustrated, at predetermined timings.

A starter motor 90 integrated with a generator is connected to the crankshaft member 21. The starter motor 90 is configured to rotate the crankshaft member 21 at the start of the engine. The generator generates power by the rotational force of the crankshaft member 21. The starter motor and the generator may be independent from each other.

### [Overall Structure of Electronically-Controlled Continuously Variable Transmission]

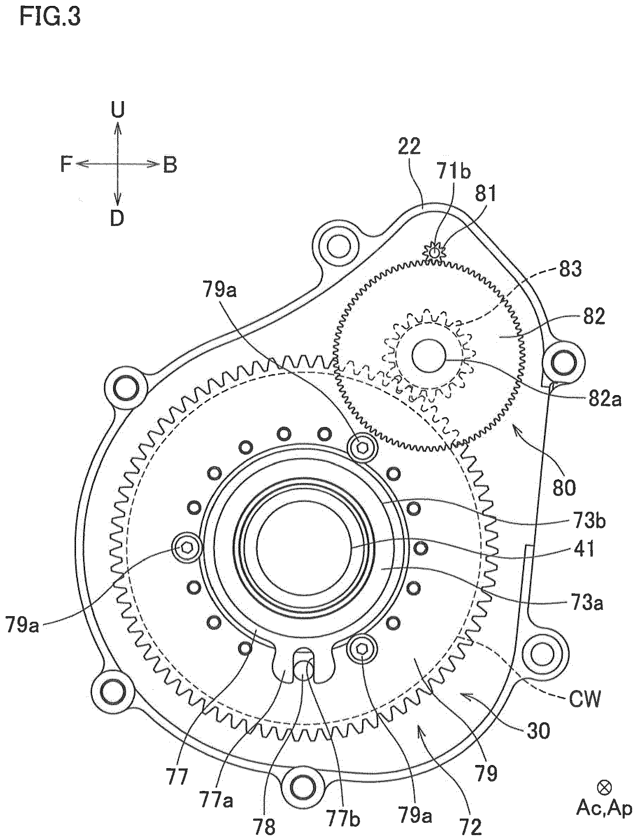

The electronically-controlled continuously variable transmission apparatus 30 will be described with reference to FIG. 3 to FIG. 6. FIG. 3 is equivalent to FIG. 2 and shows the electronically-controlled continuously variable transmission apparatus 30 from which the dry belt casing 31 has been detached. The electronically-controlled continuously variable transmission apparatus 30 includes the continuously variable transmission 40, the rotational force transmission mechanism 80, and the rotational force conversion mechanism 72.

### [Structure of Continuously Variable Transmission]

As described above, the continuously variable transmission 40 includes the dry belt casing 31, the dry belt 32, the primary shaft portion 41, the primary pulley 42, a secondary shaft portion 51, and the secondary pulley 52.

As shown in FIG. 4, the dry belt casing 31 is provided behind the cylinder body 23. The dry belt casing 31 is also known as a transmission casing. The dry belt casing 31 houses the primary pulley 42, the secondary pulley 52, and the dry belt 32. The dry belt casing 31 extends rearward from the rear end portion of the cylinder body 23 to the rear wheel 3. A suspending portion 33 is formed at a lower part of the dry belt casing 31. A front boss portion 31b is formed at the suspending portion 33 to protrude forward. The front boss portion 31b is rotatably supported by a pivot shaft (not illustrated) to be rotatable relative to the vehicle body frame. An oil filter 34 is attached to the suspending portion 33. The dry belt casing 31 forms a dry space 31a.

The dry belt 32 is wound onto the primary pulley 42 and the secondary pulley 52. The dry belt 32 includes a slide portion 32a which slides on the primary pulley 42 and the secondary pulley 52. The slide portion 32a is not to be lubricated by lubricant. In this specification, the slide portion 32a of the dry belt 32 is a part of the dry belt 32, which is in contact with and slides on the primary pulley 42 and the secondary pulley 52.

The primary shaft portion 41 is molded together with the crankshaft member 21, at a left end portion of the crankshaft member 21 in the vehicle left-right direction. The primary rotational axis Ap is provided on the crank rotational axis Ac. The primary shaft portion 41 is rotatable in accordance with the rotation of the crankshaft member 21. In short, the primary shaft portion 41 is a drive shaft portion. The primary shaft portion 41 receives power from the crankshaft member 21. In an example shown in FIG. 4, the primary shaft portion 41 is a part to the left of the cam chain 28c wound on the crankshaft member 21. The diameter of the primary shaft portion 41 is smaller than the diameter of a part of the crankshaft member 21 where the cam chain 28c is wound. The primary shaft portion 41 is formed such that the left part in the vehicle left-right direction is smaller in diameter than the right part. The primary shaft portion 41 is formed to penetrate the crankcase member 22. In other words, in the vehicle left-right direction, the right part of the primary shaft portion 41 is provided in the lubrication space 22c formed by the crankcase member 22. The left part of the primary shaft portion 41 is provided in the dry space 31a formed by the dry belt casing 31.

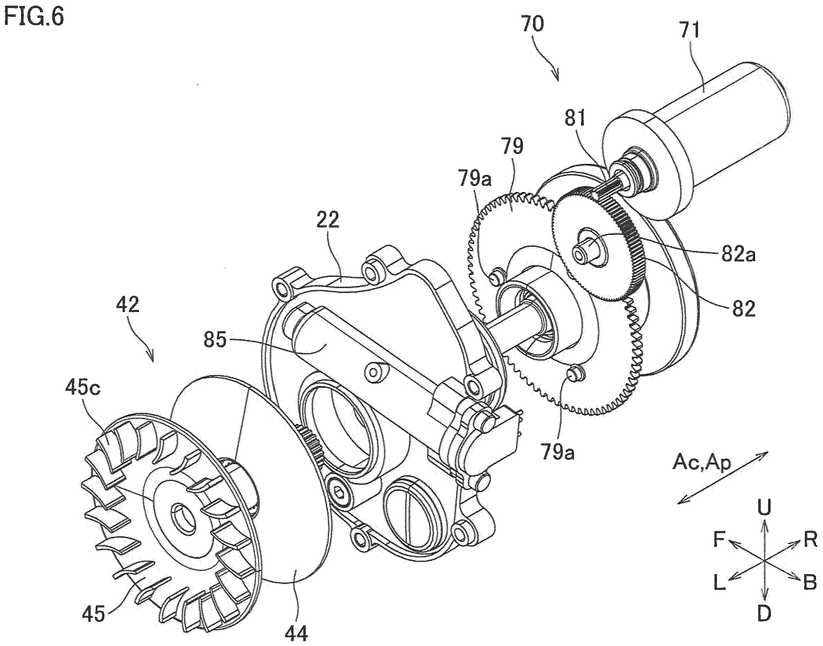

The primary pulley 42 is attached to the primary shaft portion 41. The primary pulley 42 includes a collar member 43a, a collar member 43b, a primary movable sheave 44, and a primary fixed sheave 45. Each of the collar member 43a and the collar member 43b is cylindrical in shape. The collar member 43a and the collar member 43b are connected to each other. The collar member 43a and the collar member 43b are provided on the outer circumferential surface of the primary shaft portion 41. The collar member 43a and the collar member 43b are fastened to the primary shaft portion 41 by a locknut 47 via a spacer 46 and a disc spring 46a. The collar member 43a and the collar member 43b rotate together with the crankshaft member 21 and the primary shaft portion 41. The collar member 43a is provided to the right of the primary fixed sheave 45 in the vehicle left-right direction. The collar member 43b is provided to the right of the collar member 43a in the vehicle left-right direction. The primary movable sheave 44 is provided on the outer circumferential surface of the collar member 43a. As shown in FIG. 6, the primary movable sheave 44 and the primary fixed sheave 45 are provided to the left of the crankcase member 22 in the vehicle left-right direction. In other words, the primary movable sheave 44 and the primary fixed sheave 45 are provided in the dry space 31a. The primary movable sheave 44 is provided on the crank rotational axis Ac which is the rotational axis of the crankshaft member 21. In other words, the primary movable sheave 44 is provided on the rotational axis of the primary shaft portion 41. The rotational axis of the primary shaft portion 41 is identical with the primary rotational axis Ap which is the rotational axis of the primary movable sheave 44.

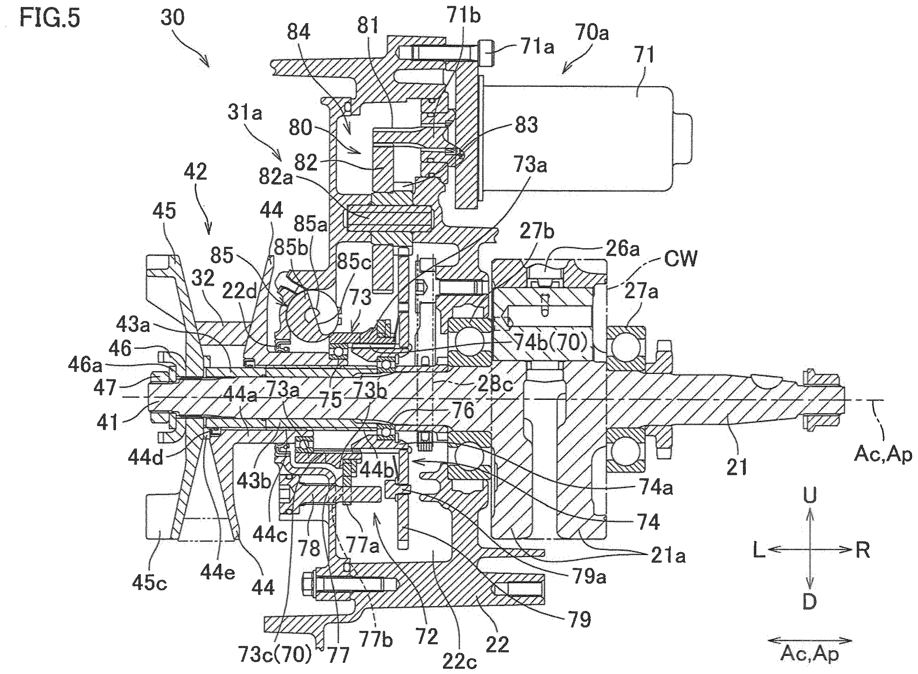

As shown in FIG. 5, a slide member 44a is molded to be integrated with a right end portion of the primary movable sheave 44. In other words, the slide member 44a is connected to the primary movable sheave 44. The slide member 44a is cylindrical in shape. A slit 44b is formed in the outer circumferential surface of the collar member 43b along the primary rotational axis Ap. In an example shown in FIG. 5, the direction of the primary rotational axis Ap is identical with the vehicle left-right direction. The primary movable sheave 44 and the slide member 44a are provided with a spline 44c. The spline 44c is inserted into the slit 44b of the collar member 43b. The spline 44c is arranged to be movable in the direction of the primary rotational axis Ap, along the slit 44b. With this arrangement, the primary movable sheave 44 and the slide member 44a are movable in the rotational axis direction of the primary movable sheave 44, along the slit 44b of the collar member 43b. Meanwhile, the spline 44c is arranged to be immovable in the slit 44b in the rotational direction of the primary movable sheave 44. As a result, the primary movable sheave 44 and the slide member 44a are arranged to rotate together with the crankshaft member 21 and the primary shaft portion 41. A sealing member 44d is provided between the inner circumferential surface of the primary movable sheave 44 and the collar member 43a. A space formed between the slide member 44a and the collar member 43a communicates with the lubrication space 22c. The slit 44b is exposed to the lubrication space 22c. The slit 44b is lubricated by oil in the lubrication space 22c. The sealing member 44d prevents the oil lubricating the slit 44b from leaking to the dry space 31a from the lubrication space 22c.

As described above, the slide member 44a is molded to be integrated with the right end portion of the primary movable sheave 44 of the primary pulley 42. The slide member 44a is attached to the collar member 43a and the collar member 43b. A right end portion of the slide member 44a is formed to be smaller in diameter than the other parts. A later-described moving member bearing 75 is fitted to the outer circumferential surface of the right end portion of the slide member 44a. The slide member 44a is formed to penetrate the crankcase member 22. A sealing member 22d is provided between the outer circumferential surface of the slide member 44a and the crankcase member 22. The sealing member 22d prevents oil from leaking from the lubrication space 22c formed by the crankcase member 22 to the dry space 31a.

The primary fixed sheave 45 is spline-engaged with the primary shaft portion 41 so as to make contact with the left surface in the vehicle left-right direction of the collar member 43a. To the left in the vehicle left-right direction of the primary fixed sheave 45, the spacer 46, the disc spring 46a, and the locknut 47 are provided at the left end portion of the primary shaft portion 41. As the locknut 47 is fastened, the primary fixed sheave 45 is fixed to the primary shaft portion 41 to be immovable in the direction of the primary rotational axis Ap. To put it differently, the primary fixed sheave 45 rotates together with the crankshaft member 21 and the primary shaft portion 41. Cooling fins 45c are radially provided on the left surface of the primary fixed sheave 45 in an integrated manner. An air inlet (not illustrated) is formed at a front portion of the dry belt casing 31. The primary fixed sheave 45 is rotationally driven in accordance with the rotation of the primary shaft portion 41. In other words, the primary fixed sheave 45 is rotationally driven by the rotation of the crankshaft member 21. As the cooling fins 45c rotate, air is introduced into the dry belt casing 31 through the air inlet. The cooling fins 45c introduce outside air into the dry belt casing 31. The air introduced into the dry belt casing 31 makes contact with the primary pulley 42, the secondary pulley 52, and the dry belt 32. As a result, the primary pulley 42, the secondary pulley 52, and the dry belt 32 radiate heat. The air in the dry belt casing 31 is discharged through an air outlet (not illustrated) formed in a rear portion or lower portion of the dry belt casing 31.

As such, the primary shaft portion 41 rotates in accordance with the rotation of the crankshaft member 21. The primary movable sheave 44 and the primary fixed sheave 45 are rotationally driven in accordance with the rotation of the primary shaft portion 41. In accordance with the movement of the slide member 44a, the primary movable sheave 44 moves in the direction of the rotational axis Ap. The primary fixed sheave 45 is immovable in the direction along the primary rotational axis Ap.

The primary movable sheave 44 and the primary fixed sheave 45 grip the dry belt 32. A surface of the primary movable sheave 44 which opposes the primary fixed sheave 45 is in contact with the slide portion 32a of the dry belt 32. A surface of the primary fixed sheave 45 which opposes the primary movable sheave 44 is in contact with the slide portion 32a of the dry belt 32. The dry belt 32 is rotated in accordance with the rotation of the primary movable sheave 44 and the primary fixed sheave 45.

As shown in FIG. 4, the rotational axis direction of the secondary shaft portion 51 is parallel to the direction of the primary rotational axis Ap. The secondary shaft portion 51 is a driven shaft portion. A gear casing 61 is provided to the right of the rear end portion of the dry belt casing 31. The gear casing 61 is connected to a case main body 62 which is provided to the right of the gear casing 61. The gear casing 61 and the case main body 62 form a lubrication space 60a in which oil exists. The secondary shaft portion 51 is formed to penetrate the gear casing 61. In other words, in the vehicle left-right direction, a right part of the secondary shaft portion 51 is provided in the lubrication space 60a formed by the gear casing 61 and the case main body 62. The left part of the secondary shaft portion 51 is provided in the dry space 31a formed by the dry belt casing 31. A drive shaft portion 60 for rotating the rear wheel 3 is provided in the lubrication space 60a. The rotational axis direction of the drive shaft portion 60 is arranged to be parallel to the rotational axis direction of the secondary shaft portion 51. Furthermore, in the lubrication space 60a, a secondary main shaft portion (not illustrated) is provided so that its rotational axis direction is parallel to the rotational axis direction of the secondary shaft portion 51 and the rotational axis direction of the drive shaft portion 60. A sealing member 51a is provided between the outer circumferential surface of the secondary shaft portion 51 and the gear casing 61. The sealing member 51a prevents oil from leaking to the dry space 31a from the lubrication space 60a.

The secondary shaft portion 51 is supported by the gear casing 61 via a bearing 61a. A right end portion of the secondary shaft portion 51 is supported by the case main body 62 via a bearing 62a. A left end portion of the secondary shaft portion 51 is supported by the dry belt casing 31 via a bearing 63 and a spacer 63a.

The secondary pulley 52 is attached to the secondary shaft portion 51. The secondary pulley 52 includes a collar member 53, a secondary movable sheave 54, and a secondary fixed sheave 55. The collar member 53 is cylindrical in shape. The collar member 53 is rotatably attached to the outer circumferential surface of the secondary shaft portion 51 via a bearing 55a and a bearing 55b. The collar member 53 is attached to the secondary shaft portion 51 to be immovable in the rotational axis direction of the secondary movable sheave 54. A slide member 53a is attached to the collar member 53. The slide member 53a is provided between the inner circumferential surface of the secondary movable sheave 54 and the outer circumferential surface of the collar member 53. The slide member 53a is connected to the secondary movable sheave 54. A slit 53b is formed in the outer circumferential surface of the collar member 53 along the rotational axis direction of the secondary movable sheave 54. In an example shown in FIG. 4, the rotational axis direction of the secondary movable sheave 54 is identical to the vehicle left-right direction. The slide member 53a has a key 53c. This key 53c is inserted into the slit 53b. The key 53c is arranged to be movable in the rotational axis direction of the secondary movable sheave 54. As a result, the slide member 53a and the secondary movable sheave 54 are movable in the axial direction of the secondary shaft portion 51 along the slit 53b of the collar member 53. Meanwhile, the key 53c is arranged to be immovable in the rotational axis direction of the secondary movable sheave 54. As a result, the slide member 53a and the secondary movable sheave 54 rotate in accordance with the rotation of the collar member 53.

The secondary fixed sheave 55 is fitted into and fixed to the collar member 53. In other words, the secondary fixed sheave 55 is attached to the secondary shaft portion 51 via the collar member 53. The secondary fixed sheave 55 rotates in accordance with the rotation of the collar member 53. The rotation of the secondary fixed sheave 55 is not accompanied with the rotation of the secondary shaft portion 51. The secondary fixed sheave 55 is attached to the collar member 53 to be immovable in the rotational axis direction of the secondary movable sheave 54.

As such, the secondary movable sheave 54 and the secondary fixed sheave 55 are rotationally driven in accordance with the rotation of the collar member 53. In accordance with the movement of the slide member 53a, the secondary movable sheave 54 moves in the direction of the rotational axis. The secondary fixed sheave 55 is arranged to be immovable in the rotational axis direction of the secondary movable sheave 54.

The secondary movable sheave 54 and the secondary fixed sheave 55 grip the dry belt 32. A surface of the secondary movable sheave 54 which opposes the secondary fixed sheave 55 is in contact with the slide portion 32a of the dry belt 32. A surface of the secondary fixed sheave 55 which opposes the secondary movable sheave 54 is in contact with the slide portion 32a of the dry belt 32. The dry belt 32 is rotated in accordance with the rotation of the primary movable sheave 44 and the primary fixed sheave 45. The secondary movable sheave 54 and the secondary fixed sheave 55 are rotated in accordance with the rotation of the dry belt 32.

The centrifugal clutch 56 is provided to the left of the secondary pulley 52. The centrifugal clutch 56 is attached to the secondary shaft portion 51. The centrifugal clutch 56 includes a weight arm 56a, a weight 56b, and an outer clutch 56c. The weight arm 56a is fitted into and fixed to the collar member 53. The weight arm 56a rotates together with the collar member 53. The weight 56b is attached to the weight arm 56a to be swingable in the radial direction of the secondary shaft portion 51. The outer clutch 56c is provided to surround the weight 56b. The outer clutch 56c is fitted into and fixed to the secondary shaft portion 51. The outer clutch 56c rotates together with the secondary shaft portion 51. A spring 57 is provided between the secondary movable sheave 54 and the weight arm 56a. The secondary movable sheave 54 is biased by this spring 57 in a direction in which the effective diameter of the secondary pulley 52 increases.

As the rotation speed of the secondary pulley 52 increases, the weight 56b moves outward in the radial direction of the secondary shaft portion 51 due to the centrifugal force, and makes contact with the inner surface of the outer clutch 56c. As a result of this, the weight arm 56a is fitted to the outer clutch 56c. Furthermore, the collar member 53 and the secondary shaft portion 51 rotate together. The rotational force of the secondary pulley 52 is transmitted to the secondary shaft portion 51. The rotational force of the secondary shaft portion 51 is then transmitted to the rear wheel 3 via the unillustrated secondary main shaft portion and the drive shaft portion 60.

The dry belt 32 is wound onto the primary pulley 42 and the secondary pulley 52. The dry belt 32 is a transmission belt made of rubber or synthetic resin. In FIG. 4, the dry belt 32 indicated by full lines is the dry belt 32 at a low-speed position (low position) whereas the dry belt 32 indicated by two-dot chain lines is the dry belt 32 at a high-speed position (top position). The top position of the dry belt 32 is a position where the width of the primary pulley 42 is the shortest. In this specification, the width of the primary pulley 42 indicates the width of a groove formed by the primary movable sheave 44 and the primary fixed sheave 45. To put it differently, the top position of the dry belt 32 is a position where the diameter of the dry belt 32 wound onto the primary pulley 42 is the largest and the transmission ratio is the lowest. Meanwhile, the low-speed position (low position) of the dry belt 32 is a position where the width of the primary pulley 42 is the longest. To put it differently, the low position of the dry belt 32 is a position where the diameter of the dry belt 32 wound onto the primary pulley 42 is the smallest and the transmission ratio is the highest. The dry belt 32 is provided in the dry space 31a in the dry belt casing 31.

### [Structure of Rotational Force Conversion Mechanism]

As shown in FIG. 5, the rotational force conversion mechanism 72 includes the relative moving member 73 and the rotating member 74. The rotational force conversion mechanism 72 is configured to move the primary movable sheave 44 in the direction along the primary rotational axis Ap. The rotational force conversion mechanism 72 is exposed to the lubrication space 22c. As shown in FIG. 3, the rotational force conversion mechanism 72 is provided to overlap the rotation range CW of the crank web 21a when viewed in the direction along the crank rotational axis Ac. Furthermore, as shown in FIG. 5, the rotational force conversion mechanism 72 is provided not to overlap the rotation range CW of the crank web 21a when viewed in any direction orthogonal to the crank rotational axis Ac. In detail, the rotational force conversion mechanism 72 is structured as described below.

The rotating member 74 includes a fixed screw part 74a and a rotating member bearing 76. The fixed screw part 74a is supported by the primary shaft portion 41 via the rotating member bearing 76. The fixed screw part 74a rotates without being accompanied by the rotation of the primary shaft portion 41. The fixed screw part 74a includes a sheave-side gear 79. The sheave-side gear 79 is fixed to a right end portion of the fixed screw part 74a. The sheave-side gear 79 is longer in diameter than the primary pulley 42. The sheave-side gear 79 may be equal to or smaller in diameter than the primary pulley 42. The sheave-side gear 79 is fixed to the fixed screw part 74a. Three bolts 79a are provided at a left surface of the sheave-side gear 79 (see FIG. 3). The three bolts 79a rotate together with the sheave-side gear 79. The sheave-side gear 79 is engaged with the rotational force transmission gear 82. The sheave-side gear 79 is rotatable by the rotational force of the rotational force transmission gear 82. In other words, the rotating member 74 is rotatable by the rotational force of the rotational force transmission gear 82. The rotational force transmission gear 82 is included in the rotational force transmission mechanism 80. In other words, the rotating member 74 is rotatable by a rotational force transmitted from the rotational force transmission mechanism 80.

The relative moving member 73 includes a cylindrical movable screw part 73a, a protrusion 73b, a moving member bearing 75, and a ring member 77. The moving member bearing 75 is engaged with the inner side of the movable screw part 73a. In other words, the outer circumferential surface of the moving member bearing 75 is provided on the inner circumferential surface of the movable screw part 73a. The slide member 44a is engaged with the inner side of the moving member bearing 75. In other words, a right end portion of the slide member 44a is provided on the inner circumferential surface of the moving member bearing 75. The movable screw part 73a is connected to the slide member 44a via the moving member bearing 75.

A protrusion 73b is formed on the outer circumferential surface of the movable screw part 73a. A part of the movable screw part 73a, which is to the right of the protrusion 73b, is formed to be smaller in diameter than a part of the movable screw part 73a which is to the left of the protrusion 73b. The ring member 77 is coupled by pressure with the outer circumferential surface of the part of the movable screw part 73a to the right of the protrusion 73b. The ring member 77 is immovable leftward on the movable screw part 73a over the protrusion 73b. The ring member 77 has a rotation stopper 77a (see FIG. 3) which forms a U-shaped hole 77b. A bolt 78 fixed to the crankcase member 22 is inserted into the hole 77b formed in the rotation stopper 77a. As the bolt 78 is inserted into the rotation stopper 77a, the ring member 77 cannot rotate in the rotational direction of the primary movable sheave 44. In other words, the relative moving member 73 is arranged not to be able to rotate in the rotational direction of the primary movable sheave 44, on account of the ring member 77.

The relative moving member 73 is in contact with the rotating member 74. A female screw thread 73c is formed on the inner circumferential surface of the movable screw part 73a of the relative moving member 73. A male screw thread 74b is formed on the outer circumferential surface of the fixed screw part 74a of the rotating member 74. Alternatively, a male screw thread is formed on the inner circumferential surface of the movable screw part 73a whereas a female screw thread is formed on the outer circumferential surface of the fixed screw part 74a. The female screw thread 73c of the movable screw part 73a and the male screw thread 74b of the fixed screw part 74a are trapezoidal threads each of which is trapezoidal in cross section taken along the direction of the primary rotational axis Ap. The male screw thread 74b of the fixed screw part 74a is engaged with the female screw thread 73c of the movable screw part 73a. In other words, the fixed screw part 74a is engaged with and in contact with the movable screw part 73a. The movable screw part 73a and the fixed screw part 74a are in contact with each other at the female screw thread 73c and the male screw thread 74b. The female screw thread 73c of the movable screw part 73a and the male screw thread 74b of the fixed screw part 74a are collectively termed the conversion contact portion 70. The female screw thread 73c of the movable screw part 73a and the male screw thread 74b of the fixed screw part 74a which are the conversion contact portion 70 are exposed to the lubrication space 22c.

The rotating member 74 is rotatable by a rotational force transmitted from the rotational force transmission mechanism 80. In other words, the fixed screw part 74a is rotatable by a rotational force transmitted from the rotational force transmission mechanism 80. Meanwhile, the relative moving member 73 is arranged not to be rotatable. In other words, the movable screw part 73a is arranged not to be rotatable. Therefore the movable screw part 73a engaged with the fixed screw part 74a moves in the direction of the primary rotational axis Ap. To put it differently, the relative moving member 73 is arranged to be movable relative to the rotating member 74 in the direction along the primary rotational axis Ap, on account of the rotational force of the rotating member 74. As the movable screw part 73a moves in the direction of the primary rotational axis Ap, the primary movable sheave 44 connected to the slide member 44a moves in the direction of its rotational axis Ap. The direction in which the relative moving member 73 moves along the rotational axis Ap is switched by whether the rotational direction of the rotating member 74 is a positive rotation or a reverse rotation.

As the primary movable sheave 44 moves in the direction of its rotational axis Ap, the primary movable sheave 44 is changed from the top position to the low position. As the primary movable sheave 44 moves rightward along the primary rotational axis Ap, the rotation stopper 77a of the relative moving member 73 makes contact with one of the three bolts 79a. As a result, the relative moving member 73 becomes no longer movable in the direction of the primary rotational axis Ap. In other words, the three bolts 79a prevent the relative moving member 73 from moving in the direction of the primary rotational axis Ap. The position where the three bolts 79a are in contact with the sheave-side gear 79 is the low position of the primary movable sheave 44. With a left end portion of the outer circumferential surface of the collar member 43a, a support member 44e is coupled at a position in contact with the primary fixed sheave 45. The support member 44e is formed to be substantially cylindrical in shape. When the primary movable sheave 44 moves leftward in the direction of the primary rotational axis Ap, the primary movable sheave 44 makes contact with the support member 44e. The position where the primary movable sheave 44 is in contact with the support member 44e is the top position of the primary movable sheave 44.

### [Structure of Rotational Force Transmission Mechanism]

The rotational force transmission mechanism 80 includes an output gear 81, a rotational force transmission gear 82, a rotational shaft 82a, and a rotating member gear 83. The output gear 81, the rotational force transmission gear 82, the rotational shaft 82a, and the rotating member gear 83 are made of metal. The rotational force transmission mechanism 80 is exposed to the lubrication space 22c.

The electric motor 71 shown in FIG. 5 is provided between the cylinder body 23 (see FIG. 4) and the throttle body (not illustrated). The electric motor 71 is fixed to an outer wall of the crankcase member 22 by a bolt 71a. An output gear 81 is formed on a rotational shaft 71b of the electric motor 71. The rotational shaft 71b of the electric motor 71 and the output gear 81 are exposed to the lubrication space 22c.

The rotational force transmission mechanism 80 is configured to transmit the rotational force of the electric motor 71. The rotational force transmission mechanism 80 is configured to transmit the rotational force of the electric motor 71 to the sheave-side gear 79 of the primary movable sheave 44. The output gear 81 is molded to be integrated with the rotational shaft 71b. The output gear 81 is engaged with the rotational force transmission gear 82 (see FIG. 3 and FIG. 6). The rotating member gear 83 is fixed to the rotational shaft 82a by pressure fitting. A left portion of the rotating member gear 83 is smaller in diameter than a right portion thereof. The rotational force transmission gear 82 is fixed to the left portion of the rotating member gear 83 by pressure fitting. The rotating member gear 83 rotates in accordance with the rotation of the rotational force transmission gear 82. The rotating member gear 83 is engaged with the sheave-side gear 79. In other words, the rotating member gear 83 is engaged with the sheave-side gear 79 of the rotating member 74 of the rotational force conversion mechanism 72, and is rotatable by the rotational force of the electric motor 71.

The rotational force transmission gear 82 and the rotational shaft 82a constitute the rotational force transmission gear mechanism 84. The end portions of the rotational shaft 82a are respectively supported by the crankcase member 22 to be immovable in the axial direction. The rotational force transmission gear 82 is larger in diameter than the output gear 81. The rotating member gear 83 is smaller in diameter than the rotational force transmission gear 82. The sheave-side gear 79 is larger in diameter than the rotating member gear 83. The rotation speed of the electric motor 71 is decreased by the rotational force transmission mechanism 80.

As shown in FIG. 3 and FIG. 5, the rotational force transmission mechanism 80 is provided to overlap the crankcase member 22 when the motorcycle 1 is viewed in the vehicle left-right direction. The rotational force transmission mechanism 80 is exposed to the lubrication space 22c. The rotational shaft 71b and the rotational shaft 82a are provided above a right portion of the primary shaft portion 41.

A moving distance detection unit 85 is provided to the left in the vehicle left-right direction of the sheave-side gear 79. The moving distance detection unit 85 is provided in the crankcase member 22. The moving distance detection unit 85 is a rotation sensor. The sensor axis 85a of the moving distance detection unit 85 is provided to be perpendicular to the primary shaft portion 41. An end portion of the sensor axis 85a is supported by the crankcase member 22 (see FIG. 2). A sensor arm 85b is attached to the sensor axis 85a. The sensor arm 85b makes contact with the relative moving member 73 and rotates. To be more specific, the sensor arm 85b rotates as it makes contact with the movable screw part 73a of the relative moving member 73. The sensor arm 85b is provided with a cutout portion 85c at the outer periphery. The cutout portion 85c is in contact with an end portion of the movable screw part 73a. The cutout portion 85c is a contact portion of the present invention. The cutout portion 85c is arranged to always be in contact with the end portion of the movable screw part 73a which moves in the direction of the primary rotational axis Ap. As the movable screw part 73a moves in the direction of the primary rotational axis, the cutout portion 85c in contact with the movable screw part 73a moves in the direction along the primary rotational axis, with the result that the sensor arm 85b rotates. In other words, when the primary pulley 42 moves between the low position and the top position, the sensor arm 85b in contact with the movable screw part 73a rotates. In this way, the moving distance detection unit 85 detects the location after movement of the relative moving member 73 in the direction of the primary rotational axis. In other words, the moving distance detection unit 85 is configured to detect the moving distance of the primary movable sheave 44 and the slide member 44a having moved in the direction of the primary rotational axis Ap. The moving distance detection unit 85 is exposed to the lubrication space 22c.

### [Operations of Electronically-Controlled Continuously Variable Transmission]

The following will describe operations of the electronically-controlled continuously variable transmission apparatus 30.

As the engine rotation speed increases in accordance with an accelerator operation, shifting is carried out based on the transmission ratio set in advance in accordance with the engine rotation speed. The electronically-controlled continuously variable transmission apparatus 30 controls the rotation of the electric motor 71 so that the dry belt 32 is arranged to have a belt winding diameter which is set in accordance with the transmission ratio. The output gear 81 rotates in accordance with the rotation of the electric motor 71. The rotational force transmission gear 82 rotates in accordance with the rotation of the output gear 81 with which the gear 82 is engaged. The rotating member gear 83 rotates in accordance with the rotation of the rotational force transmission gear 82 which is fixed to the same rotational shaft 82a as the rotating member gear 83. The sheave-side gear 79 rotates in accordance with the rotation of the rotating member gear 83 which is engaged with the sheave-side gear 79. As the sheave-side gear 79 rotates, the rotating member 74 fixed to the sheave-side gear 79 rotates. Then the relative moving member 73 engaged with the rotating member 74 moves in the axial direction. The relative moving member 73 moves in the axial direction by a distance corresponding to a rotation amount of the electric motor 71. As a result of this, the primary movable sheave 44 moves by a predetermined distance toward the top position. In other words, the rotational force conversion mechanism 72 continuously changes the width of the primary pulley 42 on which the dry belt 32 is wound. The diameter of the primary pulley 42 becomes the belt winding diameter having been set. To put it differently, the rotational force conversion mechanism 72 continuously changes the diameter of the dry belt 32 wound onto the primary pulley 42. In this way, the electronically-controlled continuously variable transmission apparatus 30 is able to control the transmission ratio of the continuously variable transmission 40 in a stepless manner by the electric motor 71.

### [Sealing Members of Electronically-Controlled Continuously Variable Transmission]

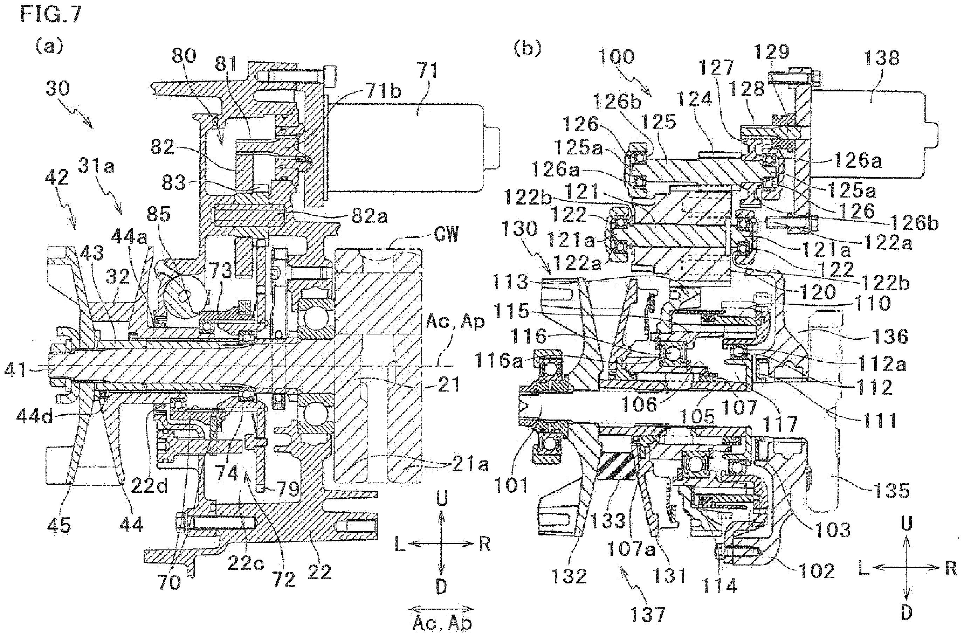

With reference to FIGs. 7(a) and 7(b), the number of sealing members in the electronically-controlled continuously variable transmission apparatus 30 of the present embodiment is compared with the number of sealing members in an electronically-controlled continuously variable transmission apparatus 100 of JP 2007-10104 A.

As shown in FIG. 7(a), the engine unit 6 of the present embodiment is arranged so that two sealing members are provided in the electronically-controlled continuously variable transmission apparatus 30 to prevent oil from leaking from the lubrication space 22c to the dry space 31a. The first sealing member is a sealing member 22d which is provided between the outer circumferential surface of the slide member 44a and the crankcase member 22. The sealing member 22d is in contact with the slide member 44a which rotates and slides. The slide member 44a rotates in accordance with the rotation of the crankshaft member 21. Furthermore, the slide member 44a moves in the direction of the primary rotational axis Ap in accordance with the rotation of the electric motor 71 at the time of shifting. In other words, resistance on account of rotation occurs on the sealing member 22d while the crankshaft member 21 rotates. Furthermore, resistance on account of sliding occurs on the sealing member 22d at the time of shifting. The second sealing member is a sealing member 44d which is provided between an end portion of the primary movable sheave 44 and the collar member 43a. The sealing member 44d slides together with the primary movable sheave 44. The sealing member 44d is in contact with the collar member 43a. The primary movable sheave 44 moves in the direction of the primary rotational axis Ap in accordance with the rotation of the electric motor 71 at the time of shifting. On this account, resistance due to sliding occurs on the sealing member 44d only at the time of shifting. In the engine unit 6 of the present embodiment, resistance is particularly high at the sealing member 22d among the sealing members.

As shown in FIG. 7(b), the electronically-controlled continuously variable transmission apparatus 100 of the engine unit of JP 2007-10104 A includes a primary pulley 130. The primary pulley 130 includes a primary movable sheave 131 and a primary fixed sheave 132. A dry belt 133 is wound onto the primary pulley 130. The primary shaft portion 101 is formed to be integrated with a crankshaft member 135. A slide member 106 is attached to the primary movable sheave 131 and is slidably supported by the primary shaft portion 101. The electronically-controlled continuously variable transmission apparatus 100 includes a rotating member 115 which is supported by the slide member 106 via a bearing 116. The electronically-controlled continuously variable transmission apparatus 100 includes a relative moving member 110 which is engaged with the rotating member 115 and is arranged not to rotate by a crankcase member 102. A bearing 112 is provided between the relative moving member 110 and the primary shaft portion 101. In the engine unit of JP 2007-10104 A, the crankcase member 102 forms a lubrication space 136 in which lubricant is provided. The crankshaft member 135 is provided in the lubrication space 136. A collar member 105 attached to the outer periphery of the primary shaft portion 101, the slide member 106, the relative moving member 110, a support member 111, the bearing 112, the rotating member 115, and the bearing 116 form a dedicated lubrication chamber 117 in which lubricant exists. The dry belt 133 is provided in a dry space 137.

The electronically-controlled continuously variable transmission apparatus 100 includes a sheave-side gear 113, a motor-side gear 120, a rotation transmission small gear 124, a rotation transmission large gear 127, and an output gear 128. The sheave-side gear 113 is engaged with the rotating member 115. The electronically-controlled continuously variable transmission apparatus 100 includes a rotational force transmission gear mechanism constituted by the rotation transmission small gear 124 and the rotation transmission large gear 127. The motor-side gear 120 is engaged with the sheave-side gear 113. The rotation transmission small gear 124 is engaged with the motor-side gear 120. The motor-side gear 120 is rotatable by a motor-side shaft 121. The rotation transmission small gear 124 is rotatable by a rotational force transmission gear shaft 125. The rotation transmission large gear 127 is attached to the rotational force transmission gear shaft 125 and is rotatable by the rotational force transmission gear shaft 125. The output gear 128 is engaged with the rotation transmission large gear 127. The output gear 128 is formed on the rotational axis 129 of an electric motor 138. At each of bearings 122 provided at respective ends 121a of the motor-side shaft 121 which rotates the motor-side gear 120, a dedicated lubrication chamber 122a lubricated by lubricant is formed. At each of bearings 126 provided at respective ends 125a of the rotational force transmission gear shaft 125, a dedicated lubrication chamber 126a lubricated by lubricant is formed. The sheave-side gear 113, the motor-side gear 120, the rotation transmission small gear 124, the rotation transmission large gear 127, and the output gear 128 are provided in the dry space 137 formed by an unillustrated dry belt casing.

In the engine unit of JP 2007-10104 A, 10 sealing members are provided in the electronically-controlled continuously variable transmission apparatus 100 to prevent oil from leaking from the dedicated lubrication chambers 117, 122a, 126a, and 136 to the dry space 137. The first sealing member is a sealing member 103 which is provided between the outer circumferential surface of the primary shaft portion 101 and the crankcase member 102. The sealing member 103 is in contact with the rotating primary shaft portion 101. The primary shaft portion 101 rotates in accordance with the rotation of the crankshaft member 135. In other words, resistance on account of rotation occurs on the sealing member 103 while the crankshaft member 135 rotates. The second sealing member is a sealing member 107 which is provided between the collar member 105 and the slide member 106. The sealing member 107 slides together with the primary movable sheave 131. The sealing member 107 is in contact with the collar member 105. The slide member 106 moves in the direction of the primary rotational axis Ap in accordance with the rotation of the electric motor 71 at the time of shifting. On this account, resistance due to sliding occurs on the sealing member 107 only at the time of shifting. The third sealing member is a sealing member 112a which is on the bearing 112 provided between the relative moving member 110 and the support member 111 supporting the primary shaft portion 101. The sealing member 112a is in contact with the bearing 112. The bearing 112 rotates in accordance with the rotation of the crankshaft member 135. In other words, resistance on account of rotation occurs on the sealing member 112a while the crankshaft member 135 rotates. The fourth sealing member is a sealing member 114 which is provided between the relative moving member 110 and the sheave-side gear 113. The sealing member 114 is in contact with the rotating member 115 which rotates and slides. The rotating member 115 rotates in accordance with the rotation of the electric motor 71 at the time of shifting. The rotating member 115 moves in the direction of the primary rotational axis Ap in accordance with the rotation of the electric motor 71 at the time of shifting. In other words, resistance due to rotation occurs on the sealing member 114 only at the time of shifting. Furthermore, resistance due to sliding occurs on the sealing member 114 only at the time of shifting. The fifth sealing member is a sealing member 116a which is provided at the bearing 116 provided between the rotating member 115 and the slide member 106. The sealing member 116a is in contact with the bearing 116. The bearing 116 rotates in accordance with the rotation of the crankshaft member 135. In other words, resistance on account of rotation occurs on the sealing member 116a while the crankshaft member 135 rotates. The sixth and seventh sealing members are sealing members 122b on bearings 122 provided at the respective ends 121a of the motor-side shaft 121 which rotates the motor-side gear 120 engaged with the sheave-side gear 113. The sealing members 122b are in contact with the bearings 122. Each bearing 122 rotates in accordance with the rotation of the electric motor 71 at the time of shifting. In other words, resistance due to rotation occurs on the sealing member 122b only at the time of shifting. The eighth and ninth sealing members are sealing members 126b on bearings 126 provided at the respective ends 125a of the rotational force transmission gear shaft 125 which rotates the rotation transmission small gear 124 engaged with the motor-side gear 120. The sealing members 126b are in contact with the bearings 126. Each bearing 126 rotates in accordance with the rotation of the electric motor 71 at the time of shifting. In other words, resistance due to rotation occurs on the sealing member 126b only at the time of shifting. The tenth sealing member is a sealing member 107a which is provided between the primary movable sheave 131 and the collar member 105. The sealing member 107a is in contact with the sliding collar member 105. The collar member 105 moves in the direction of the primary rotational axis Ap in accordance with the rotation of the electric motor 71 at the time of shifting. On this account, resistance due to sliding occurs on the sealing member 107a only at the time of shifting. In the engine unit of the JP 2007-10104 A, resistance is particularly high at the sealing members 103, 112a, and 116a among the sealing members.

On this account, the number of sealing members in the electronically-controlled continuously variable transmission apparatus 30 of the present embodiment is smaller than the number of sealing members in the electronically-controlled continuously variable transmission apparatus 100 of JP 2007-10104 A.

The engine unit 6 of the present embodiment described above includes the following characteristics. The conversion contact portion 70 where the relative moving member 73 and the rotating member 74 contacts each other, is provided in the lubrication space 22c formed by the crankcase member 22 so as to be exposed to the lubrication space 22c. A large torque acts on the conversion contact portion 70 at the time of shifting. The conversion contact portion 70 is therefore required to be lubricated by lubricant. In other words, the conversion contact portion 70 which is provided to be exposed to the lubrication space 22c formed by the crankcase member 22 is lubricated by the shared lubricant in the crankcase member 22. It is therefore unnecessary to additionally provide, in the dry belt casing 31 forming the dry space 31a, a dedicated lubrication chamber casing forming a dedicated lubrication chamber in which the conversion contact portion 70 is provided. To put it differently, a sealing member for isolating the conversion contact portion 70 from the dry space 31a is unnecessary. In this way, the number of the sealing members provided in the engine unit 6 can be reduced. The mechanical loss on account of the sealing members can therefore be reduced. Therefore the fuel consumption can be further improved. As described above, in the engine unit 6 of the present invention, the fuel consumption can be further improved while the degradation of the dry belt 32 by heat is prevented.

The rotational force conversion mechanism 72 is provided not to overlap the rotation range CW of the crank web 21a when viewed in any direction orthogonal to the crank rotational axis Ac. In other words, the rotational force conversion mechanism 72 is provided at a location remote from the crank web 21a which is hot. The primary movable sheave 44 which is moved in the direction along the rotational axis Ac by the rotational force conversion mechanism 72 is provided at a location remote from the crank web 21a. The dry belt 32 wound onto the primary pulley 42 is therefore provided at a location remote from the crank web 21a. The temperature decreases away from the crank web 21a. In this way, deterioration of the dry belt 32 by heat is restrained.

The rotational force transmission mechanism 80 is provided in the lubrication space 22c so as to be exposed to the lubrication space 22c formed by the crankcase member 22. It is therefore unnecessary to additionally provide, in the dry belt casing 31 forming the dry space 31a, a dedicated lubrication chamber casing forming a dedicated lubrication chamber in which the rotational force transmission mechanism 80 is provided. To put it differently, a sealing member for isolating the rotational force transmission mechanism 80 from the dry space 31a is unnecessary. In this way, the number of the sealing members provided in the engine unit 6 can be further reduced. The mechanical loss on account of the sealing members can therefore be further reduced. Because of the above, the fuel consumption of the engine unit 6 of the present invention can be further improved.

The rotating member gear 83 is made of metal. Metal is higher in strength than resin. The durability of the engine unit 6 can therefore be improved. Furthermore, as compared to cases where the rotating member gear 83 is made of resin, the rotating member gear 83 can be reduced in size. Furthermore, as compared to cases where the rotating member gear 83 is made of resin, the rotational force transmission mechanism 80 can be reduced in size.

The rotational force transmission gear 82 in the rotational force transmission gear mechanism 84 is made of metal. Metal is higher in strength than resin. The durability of the engine unit 6 can therefore be improved. Furthermore, as compared to cases where the rotational force transmission gear 82 in the rotational force transmission gear mechanism 84 is made of resin, the rotational force transmission gear 82 in the rotational force transmission gear mechanism 84 can be reduced in size. As compared to cases where the rotational force transmission gear 82 in the rotational force transmission gear mechanism 84 is made of resin, the rotational force transmission mechanism 80 can be reduced in size.

The primary rotational axis Ap is provided on the crank rotational axis Ac. Furthermore, the primary shaft portion 41 to which the primary movable sheave 44 is attached is integrated with the crankshaft member 21. It is therefore possible to provide the rotational force conversion mechanism 72 and the rotational force transmission mechanism 80 around the primary shaft portion 41. In other words, the rotational force conversion mechanism 72 and the rotational force transmission mechanism 80 can be provided at a location remote from the crank web 21a which is hot. The primary movable sheave 44 is provided at a location remote from the crank web 21a. The dry belt 32 wound onto the primary pulley 42 is therefore provided at a location remote from the crank web 21a. The temperature decreases away from the crank web 21a. On this account, the deterioration of the dry belt 32 by heat is restrained. Furthermore, the rotational force conversion mechanism 72 and the rotational force transmission mechanism 80 can be compactly disposed.

The engine unit 6 includes the moving distance detection unit 85 which is configured to detect the moving distance of the relative moving member 73. The moving distance detection unit 85 has the cutout portion 85c which is in contact with the rotational force conversion mechanism 72. At least the cutout portion 85c of the moving distance detection unit 85 is provided in the lubrication space 22c formed by the crankcase member 22 so as to be exposed to the lubrication space 22c. This smoothens the function of the cutout portion 85c where the moving distance detection unit 85 is in contact with the rotational force conversion mechanism 72. Because the moving distance detection unit 85 and the rotational force conversion mechanism 72 smoothly move, the accuracy of the moving distance detection unit 85 is improved. Furthermore, because the cutout portion 85c is lubricated by lubricant, wear resistance is improved, degradation over time is restrained, and the accuracy of the moving distance detection unit 85 is improved.

The conversion contact portion 70 and the crankshaft member 21 are to be lubricated by shared lubricant. When the lubricant by which the conversion contact portion 70 is lubricated is different from the lubricant by which the crankshaft member 21 is lubricated, it is necessary to provide a sealing member to isolate the conversion contact portion 70 from the crankcase member 22 in order to prevent the lubricants from being mixed. In this arrangement, a sealing member for isolating the conversion contact portion 70 from the crankcase member 22 is unnecessary. In this way, the number of the sealing members provided in the engine unit 6 can be reduced. The mechanical loss on account of the sealing members can therefore be reduced. Because of the above, the fuel consumption of the engine unit 6 of the present invention can be further improved.

The shared lubricant is oil. Oil is lower in viscosity than grease. Oil can therefore widely spread over the lubrication space 22c. The conversion contact portion 70 and the crankshaft member 21 in the lubrication space 22c can be easily lubricated for this reason.

Preferred embodiments of the present invention have been described above. However, the present invention is not limited to the above-described embodiments.

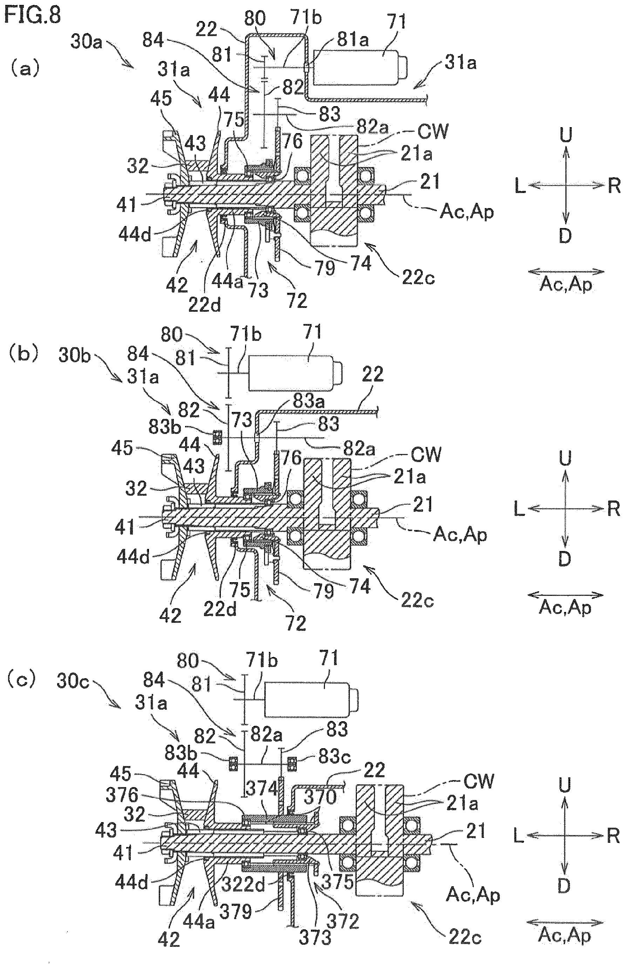

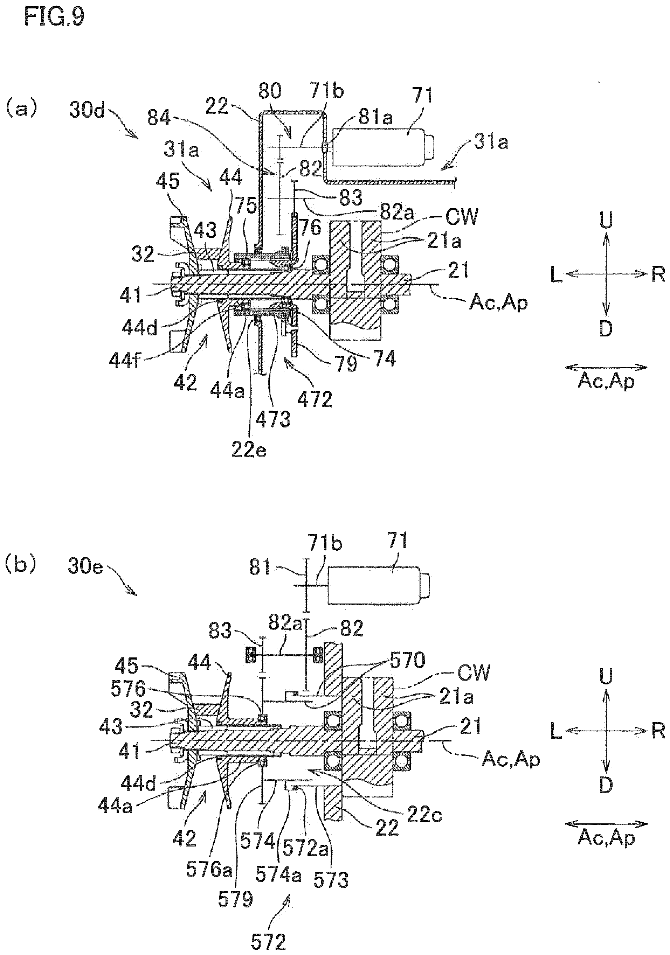

While in the embodiment above the rotational force conversion mechanism 72 and the rotational force transmission mechanism 80 are provided in the lubrication space 22c, the disclosure is not limited to this arrangement. The following will describe modifications of the electronically-controlled continuously variable transmission apparatus 30 with reference to FIGs. 8(a) to 8(c) and FIGs. 9(a) and 9(b). In FIGs. 8(a) to 8(c) and FIGs. 9(a) and 9(b), the rotational force transmission mechanism 80 is schematically shown. In the modification shown in FIGs. 8(a) to 8(c) and FIGs. 9(a) and 9(b), the rotational force conversion mechanism 72 is provided to overlap the rotation range CW of the crank web 21a when viewed in the direction of the crank rotational axis Ac. The rotational force conversion mechanism 72 is provided not to overlap the rotation range CW of the crank web 21 a when viewed in any direction orthogonal to the crank rotational axis Ac.

For example, in the electronically-controlled continuously variable transmission apparatus 30a of the modification shown in FIG. 8(a), a part of the rotational shaft 71b of the electric motor 71 is provided in the dry space 31a. The rotational force conversion mechanism 72 is entirely exposed to the lubrication space 22c. In this case, a sealing member 81a is provided between the rotational shaft 71b and the crankcase member 22 in the electronically-controlled continuously variable transmission apparatus 30a. The sealing member 81a is in contact with the rotating rotational shaft 71b. The rotational shaft 71b rotates in accordance with the rotation of the electric motor 71 at the time of shifting. In other words, resistance due to rotation occurs on the sealing member 81a only at the time of shifting. In other words, in the modification shown in FIG. 8(a), one sealing member is additionally provided in the electronically-controlled continuously variable transmission apparatus 30 as compared to the embodiment above. In other words, in the modification shown in FIG. 8(a), the number of the sealing members in the electronically-controlled continuously variable transmission apparatus 30a is three.

In the modification shown in FIG. 8(a), the rotational force transmission gear 82 is exposed to the lubrication space 22c. The rotational force transmission gear 82 is a gear included in the rotational force transmission gear mechanism 84. In this connection, bearing portions supporting the respective ends of the rotational shaft 82a of the rotational force transmission gear 82 are required to be lubricated by lubricant. It is therefore unnecessary to additionally provide, in the dry space, a dedicated lubrication chamber for housing the bearing portions of the rotational shaft 82a of the rotational force transmission gear 82. Furthermore, it is unnecessary to additionally provide, as a dedicated lubrication chamber, a space which is formed by the relative moving member 73 and the moving member bearing 75 of the rotational force conversion mechanism 72 and is lubricated by lubricant. Furthermore, it is unnecessary to additionally provide, in the dry space 31a, a dedicated lubrication chamber for housing the bearing portions of the rotational shaft 82a of the rotating member gear 83. In this way, the number of the sealing members provided in the engine unit 6 can be further reduced. The mechanical loss on account of the sealing members can therefore be further reduced. With the modification shown in FIG. 8(a), the fuel consumption of the engine unit 6 can be further improved.

In addition to the above, for example, in an electronically-controlled continuously variable transmission apparatus 30b of a modification shown in FIG. 8(b), the rotational shaft 71b of the electric motor 71, the output gear 81, the rotational force transmission gear 82, and a part of the rotational shaft 82a are provided in the dry space 31a. The output gear 81 and the rotational force transmission gear 82 provided in the dry space 31a are made of synthetic resin. The rotational force conversion mechanism 72 is exposed to the lubrication space 22c. In this case, a sealing member 83a is provided between the rotational shaft 82a and the crankcase member 22. The sealing member 83a is in contact with the rotational shaft 82a. The rotational shaft 82a rotates in accordance with the rotation of the electric motor 71 at the time of shifting. In other words, resistance due to rotation occurs on the sealing member 83a only at the time of shifting. Furthermore, a bearing 83b supporting an end portion of the rotational shaft 82a provided in the dry space 31a is provided with a single sealing member. One end portion of the bearing 83b provided in the dry space 31a is provided with a single sealing member. The other end portion of the bearing 83b is provided in the lubrication space 22c. The sealing member of the bearing 83b is in contact with the bearing 83b. The bearing 83b rotates in accordance with the rotation of the electric motor 71 at the time of shifting. In other words, resistance due to rotation occurs on the sealing member of the bearing 83b only at the time of shifting. The bearing 83b may not be provided with a sealing member. For example, the bearing 83b may be exposed to a lubrication space surrounded by the dry belt casing 31, and a single sealing member may be provided between the dry belt casing 31 and the rotational shaft 82a. In other words, in the modification shown in FIG. 8(b), two sealing members are additionally provided in the electronically-controlled continuously variable transmission apparatus 30b as compared to the embodiment above. In other words, in the modification shown in FIG. 8(b), the number of the sealing members in the electronically-controlled continuously variable transmission apparatus 30b is four.

In the modification shown in FIG. 8(b), the rotating member gear 83 is exposed to the lubrication space 22c. It is therefore unnecessary to additionally provide, in the dry space 31a, a dedicated lubrication chamber for housing the bearing portions of the rotational shaft 82a of the rotating member gear 83. Furthermore, it is unnecessary to additionally provide, as a dedicated lubrication chamber, a space which is formed by the relative moving member 73 and the moving member bearing 75 of the rotational force conversion mechanism 72 and is lubricated by lubricant. In this way, the number of sealing members provided in the engine unit 6 can be further reduced. The mechanical loss on account of the sealing members can therefore be further reduced. With the modification shown in FIG. 8(b), the fuel consumption of the engine unit 6 can be further improved.

In addition to the above, for example, in an electronically-controlled continuously variable transmission apparatus 30c of a modification shown in FIG. 8(c), the rotational shaft 71b of the electric motor 71, the output gear 81, the rotational force transmission gear 82, and the rotational shaft 82a are provided in the dry space 31a. Furthermore, a sheave-side gear 379 of a rotational force conversion mechanism 372 is provided in the dry space 31a. The output gear 81, the rotational force transmission gear 82, the rotating member gear 83, and the sheave-side gear 379 provided in the dry space 31a are made of synthetic resin. The rotational force conversion mechanism 372 includes a relative moving member 373, a rotating member 374, a moving member bearing 375, and a rotating member bearing 376. The sheave-side gear 379 is provided on the outer circumferential surface of the rotating member 374. A male screw thread and a female screw thread constituting a conversion contact portion 370 are formed on the outer circumferential surface of the relative moving member 373 and the inner circumferential surface of the rotating member 374. The rotating member bearing 376 is fitted to the outer circumferential surface of the right end portion of the slide member 44a. The rotating member bearing 376 is fitted to the inner circumferential surface of the rotating member 374. The relative moving member 373 is arranged not to be rotatable on account of a screw, etc. which is not shown. The relative moving member 373 is arranged not to be movable in the direction of the primary rotational axis Ap on account of the moving member bearing 375. The rotating member 374 is rotatable by the rotational force of the sheave-side gear 379. On account of the rotational force of the rotating member 374 itself, the rotating member 374 moves in the direction of the primary rotational axis Ap. To put it differently, the relative moving member 373 is arranged to be movable relative to the rotating member 374 in the direction along the primary rotational axis Ap. The relative moving member 373, the inner circumferential surface of the rotating member 374, and the moving member bearing 375 are exposed to the lubrication space 22c. The rotating member bearing 376 of the rotational force conversion mechanism 372 and the sheave-side gear 379 are provided in the dry space 31a. The conversion contact portion 370 of the rotational force conversion mechanism 372 is exposed to the lubrication space 22c. In this case, the electronically-controlled continuously variable transmission apparatus 30c includes a sealing member 322d which is provided between the outer circumferential surface of the rotating member 374 and the crankcase member 22. The sealing member 322d is in contact with the rotating member 374 which rotates and slides. The rotating member 374 rotates in accordance with the rotation of the electric motor 71 at the time of shifting. The rotating member 374 relatively moves in the direction of the primary rotational axis Ap in accordance with the rotation of the electric motor 71 at the time of shifting. In other words, resistance due to rotation occurs on the sealing member 322d only at the time of shifting. Furthermore, resistance on account of sliding occurs on the sealing member 322d at the time of shifting. Each of the bearings 83b and 83c supporting the respective end portions of the rotational shaft 82a is provided with one sealing member. The sealing members of the bearings 83b and 83c are in contact with the bearings 83b and 83c. Each of the bearings 83b and 83c rotates in accordance with the rotation of the electric motor 71 at the time of shifting. In other words, resistance due to rotation occurs on each of the sealing members of the bearings 83b and 83c only at the time of shifting. The rotating member bearing 376 is provided with one sealing member. The sealing member of the rotating member bearing 376 is in contact with the rotating member bearing 376, The rotating member bearing 376 rotates in accordance with the rotation of the crankshaft member 21. In other words, resistance on account of rotation occurs on the sealing member of the rotating member bearing 376 while the crankshaft member 21 rotates. The rotating member bearing 376 may not be provided with a sealing member. For example, the rotating member bearing 376 is exposed to the lubrication space 22c formed by the inner circumferential surface of the rotating member 374, and a sealing member is provided between the leading end portion on the primary movable sheave 44 side of the rotating member 374 and the primary movable sheave 44. Similarly, each of the bearings 83b and 83c may not be provided with a sealing member. For example, the bearings 83b and 83c may be exposed to a lubrication space surrounded by the dry belt casing 31, and a single sealing member may be provided between the dry belt casing 31 and the rotational shaft 82a. In other words, in the modification shown in FIG. 8(c), three sealing members are additionally provided in the electronically-controlled continuously variable transmission apparatus 30c as compared to the embodiment above. In other words, in the modification shown in FIG. 8(c), the number of the sealing members in the electronically-controlled continuously variable transmission apparatus 30c is five.

In the modification of FIG. 8(c), the conversion contact portion 70 of the rotational force conversion mechanism 372 is exposed to the lubrication space 22c. It is therefore unnecessary to additionally provide, in the dry space 31a, a dedicated lubrication chamber for lubricating the conversion contact portion 70 by lubricant. In this way, the number of the sealing members provided in the engine unit 6 can be reduced. The mechanical loss on account of the sealing members can therefore be reduced. With the modification shown in FIG. 8(c), the fuel consumption of the engine unit 6 can be further improved.

In addition to the above, for example, an electronically-controlled continuously variable transmission apparatus 30d of a modification shown in FIG. 9(a) is different from the electronically-controlled continuously variable transmission apparatus 30a of the modification of FIG. 8(a) in the structure of the rotational force conversion mechanism. The following will describe the structure of a rotational force conversion mechanism 472. The rotational force conversion mechanism 472 includes a relative moving member 473 and a rotating member 74. A part of the relative moving member 473 is provided in the dry space 31a. The rotating member 74 is entirely exposed to the lubrication space 22c. In this case, a sealing member 22e is provided between the relative moving member 473 and the crankcase member 22 in the electronically-controlled continuously variable transmission apparatus 30d. The sealing member 22e is in contact with the sliding relative moving member 473. The relative moving member 473 slides in accordance with the rotation of the electric motor 71 at the time of shifting. On this account, resistance due to sliding occurs on the sealing member 22e only at the time of shifting. Furthermore, a sealing member 44f is provided between the relative moving member 473 and the slide member 44a in the electronically-controlled continuously variable transmission apparatus 30d. The sealing member 44f is in contact with the rotating slide member 44a. The slide member 44a rotates in accordance with the rotation of the crankshaft member 21. In other words, resistance on account of rotation occurs on the sealing member 44f while the crankshaft member 21 rotates. In other words, in the modification shown in FIG. 9(a), one sealing member is additionally provided in the electronically-controlled continuously variable transmission apparatus 30 as compared to the modification of FIG. 8(a). Therefore, in the modification shown in FIG. 9(a), the number of the sealing members in the electronically-controlled continuously variable transmission apparatus 30d is four.

In addition to the effect of the electronically-controlled continuously variable transmission apparatus 30a of the modification of FIG. 8(a), the electronically-controlled continuously variable transmission apparatus 30d of the modification of FIG. 9(a) exerts an effect such that a sealing member in contact with a rotating member and a sealing member in contact with a sliding member are individually provided. The wear resistance of the sealing members can be improved as compared to cases where a sealing member is in contact with both a rotating member and a sliding member.

In addition to the above, for example, an electronically-controlled continuously variable transmission apparatus 30e of a modification shown in FIG. 9(b) is different from the electronically-controlled continuously variable transmission apparatus 30c of the modification of FIG. 8(c) in the structure of the rotational force conversion mechanism. The following will describe the structure of a rotational force conversion mechanism 572. The rotational force conversion mechanism 572 includes a relative moving member 573, a rotating member 574, and a rotating member bearing 576. A sheave-side gear 579 is provided on the outer circumferential surface of the rotating member bearing 576. A male screw thread and a female screw thread constituting a conversion contact portion 570 are formed on the inner circumferential surface of the relative moving member 573 and the outer circumferential surface of the rotating member 574. The relative moving member 573 is formed to be integrated with a crankcase member 22. The relative moving member 573 may be fixed to the crankcase member 22 by a screw member, etc. which is not illustrated. As a result, the relative moving member 573 is arranged not to be rotatable on account of the screw member or the like which is not shown. The relative moving member 573 is arranged not to be movable in the direction of the primary rotational axis Ap by a screw member, etc. which is not illustrated. The rotating member 574 includes a cover member 574a which covers a part of the outer circumferential surface of the relative moving member 573. The rotating member 574 is rotatable by the rotational force of the sheave-side gear 579. On account of the rotational force of the rotating member 574 itself, the rotating member 574 moves in the direction of the primary rotational axis Ap. To put it differently, the relative moving member 573 is arranged to be movable relative to the rotating member 574 in the direction along the primary rotational axis Ap. A part of the relative moving member 573 and a part of the rotating member 574 are provided in the dry space 31a. In this case, a sealing member 572a is provided between the cover member 574a of the rotating member 574 and the relative moving member 573 in the electronically-controlled continuously variable transmission apparatus 30e. The sealing member 572a is in contact with the rotating member 574 which rotates and slides. The rotating member 574 rotates and slides in accordance with the rotation of the electric motor 71 at the time of shifting. On this account, resistance due to sliding occurs on the sealing member 572a only at the time of shifting. Furthermore, resistance due to rotation occurs on the sealing member 572a only at the time of shifting. In the electronically-controlled continuously variable transmission apparatus 30e, a sealing member 576a is provided at the rotating member bearing 576. The sealing member 576a is in contact with the rotating member bearing 576. The rotating member bearing 576 rotates in accordance with the rotation of the crankshaft member 21. In other words, resistance on account of rotation occurs on the sealing member 576a while the crankshaft member 21 rotates. In other words, in the modification shown in FIG. 9(b), the number of the sealing members in the electronically-controlled continuously variable transmission apparatus 30e is five.

In the modification of FIG. 9(b), the conversion contact portion 570 of the rotational force conversion mechanism 572 is exposed to the lubrication space 22c. It is therefore unnecessary to additionally provide, in the dry space 31a, a dedicated lubrication chamber for lubricating the conversion contact portion 570 by lubricant. In this way, the number of the sealing members provided in the engine unit 6 can be reduced. The mechanical loss on account of the sealing members can therefore be reduced. With the modification shown in FIG. 9(b), the fuel consumption of the engine unit 6 can be further improved.

The number of sealing members included in each of the electronically-controlled continuously variable transmission apparatuses 30a to 30e of the modifications shown in FIGs. 8(a) to 8(c) and FIGs. 9(a) and 9(b) is smaller than the number of sealing members included in the electronically-controlled continuously variable transmission apparatus 100 of JP 2007-10104 A.

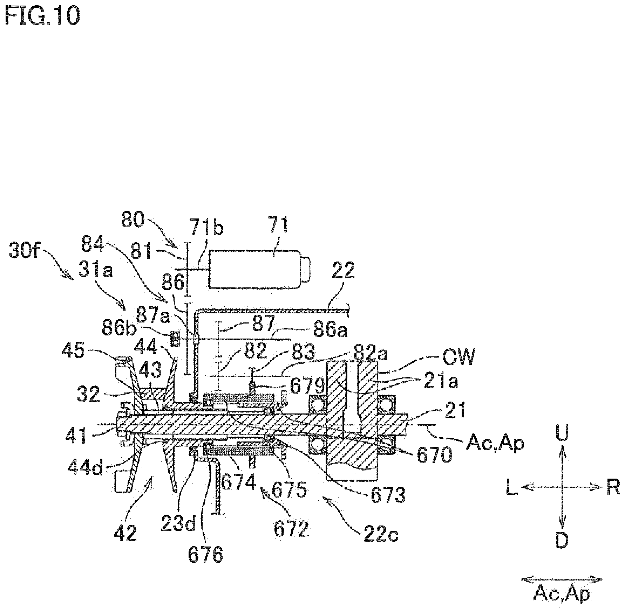

While the rotational force transmission gear 82 is the only gear included in the rotational force transmission gear mechanism 84 in the embodiment above, the disclosure is not limited to this arrangement. For example, as shown in FIG. 10, the rotational force transmission gear mechanism 84 includes not only the rotational force transmission gear 82 but also a speed reduction large gear 86 and a speed reduction small gear 87. In FIG. 10, the rotational force transmission mechanism 80 is schematically shown. The speed reduction large gear 86 is larger in diameter than the speed reduction small gear 87. The output gear 81 is engaged with the speed reduction large gear 86. The speed reduction large gear 86 and the speed reduction small gear 87 are fixed to a speed reduction gear shaft 86a. The speed reduction small gear 87 is engaged with the rotational force transmission gear 82.

In the modification shown in FIG. 10, the rotational shaft 71b of the electric motor 71, the output gear 81, the speed reduction large gear 86, and a part of the speed reduction gear shaft 86a are provided in the dry space 31a. The output gear 81 and the speed reduction large gear 86 provided in the dry space 31a are made of synthetic resin. A rotational force conversion mechanism 672 is entirely exposed to the lubrication space 22c. The rotational force conversion mechanism 672 includes a relative moving member 673, a rotating member 674, a moving member bearing 675, and a rotating member bearing 676. A sheave-side gear 679 is provided on the outer circumferential surface of the rotating member 674. A male screw thread and a female screw thread constituting a conversion contact portion 670 are formed on the outer circumferential surface of the relative moving member 673 and the inner circumferential surface of the rotating member 674. The rotating member gear 83 is engaged with the sheave-side gear 679. The rotating member 674 is rotatable by a rotational force transmitted from the rotational force transmission mechanism 80. A rotating member bearing 676 is fitted to the outer circumferential surface of the right end portion of the slide member 44a. The rotating member bearing 676 is fitted to the inner circumferential surface of the rotating member 674. A moving member bearing 675 is fitted to the inner circumferential surface of the relative moving member 673. A moving member bearing 675 is fitted to the outer circumferential surface of the crankshaft member 41. The relative moving member 673 is arranged not to be rotatable on account of a screw member, etc. which is not shown. The relative moving member 673 is arranged not to be movable in the direction of the primary rotational axis Ap on account of the moving member bearing 675. On account of the rotational force of the rotating member 674 itself, the rotating member 674 moves in the direction of the primary rotational axis Ap. To put it differently, the relative moving member 673 is arranged to be movable relative to the rotating member 674 in the direction along the primary rotational axis Ap. In this case, a sealing member 87a is provided between the speed reduction gear shaft 86a and the crankcase member 22 in an electronically-controlled continuously variable transmission apparatus 30f. Furthermore, a bearing 87b supporting an end portion of the speed reduction gear shaft 86a provided in the dry space 31a is provided with a sealing member. In other words, in the modification shown in FIG. 10, two sealing members are additionally provided in the electronically-controlled continuously variable transmission apparatus 30f as compared to the embodiment above. Therefore, in the modification shown in FIG. 10, the number of the sealing members in the electronically-controlled continuously variable transmission apparatus 30f is four.

In the modification shown in FIG. 10, the rotational force transmission gear 82 and the speed reduction small gear 87 are exposed to the lubrication space 22c. The rotational force transmission gear 82 and the speed reduction small gear 87 are of the gears included in the rotational force transmission gear mechanism 84. In this connection, bearing portions supporting the respective ends of the rotational shaft 82a of the rotational force transmission gear 82 and bearing portions supporting the respective ends of the speed reduction gear shaft 86a of the speed reduction small gear 87 are required to be lubricated by lubricant. It is therefore unnecessary to additionally provide, in the dry space, a dedicated lubrication chamber for housing the bearing portions of the rotational shaft 82a of the rotational force transmission gear 82 and a part of the bearing portions of the speed reduction gear shaft 86a of the speed reduction small gear 87. Furthermore, it is unnecessary to additionally provide a dedicated lubrication chamber for storing the conversion contact portion 670 which is in contact with the relative moving member 673 and the rotating member 674 of the rotational force conversion mechanism 672. Furthermore, it is unnecessary to additionally provide, in the dry space 31a, a dedicated lubrication chamber for housing the bearing portions of the rotational shaft 82a of the rotating member gear 83. In this way, the number of the sealing members provided in the engine unit 6 can be further reduced. The mechanical loss on account of the sealing members can therefore be further reduced. With the modification shown in FIG. 10, the fuel consumption of the engine unit 6 can be further improved. Furthermore, the rotational force conversion mechanism 72 can be reduced in size. Increase in size of the engine unit 6 is therefore restrained.

In the modification shown in FIG. 10, the rotational force conversion mechanism 72 is provided to overlap the rotation range CW of the crank web 21a when viewed in the direction of the crank rotational axis Ac. The rotational force conversion mechanism 72 is provided not to overlap the rotation range CW of the crank web 21a when viewed in any direction orthogonal to the crank rotational axis Ac.

While in the embodiment above the primary shaft portion 41 is a part to the left of the cam chain 28c wound on the crankshaft member 21, the disclosure is not limited to this arrangement. The primary shaft portion 41 may be a part to the left of the bearing 27b which is provided to the left of the crank web 21a.

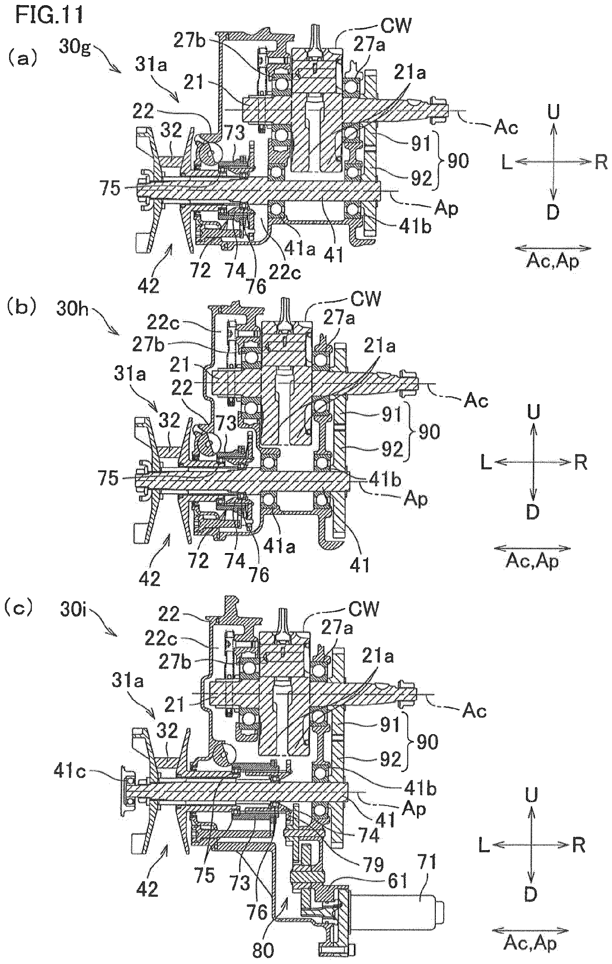

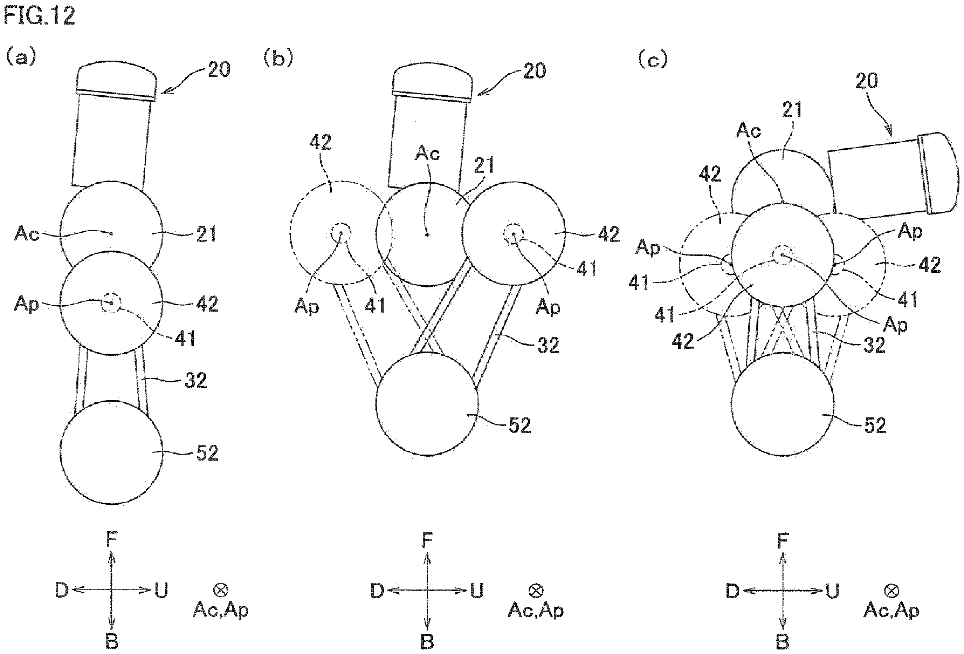

While in the embodiment above the crankshaft member 21 and the primary shaft portion 41 are integrally molded, the disclosure is not limited to this arrangement. The crankshaft member 21 and the primary shaft portion 41 may be individually molded. The crankshaft member 21 and the primary shaft portion 41 which are individually molded may be integrated. In this case, the primary rotational axis Ap is provided on the crank rotational axis Ac. The primary rotational axis Ap may be provided to be parallel to the crank rotational axis Ac. Modifications in which the primary rotational axis Ap is provided to be parallel to the crank rotational axis Ac will be described with reference to FIGs. 11(a) to 11(c) and FIGs. 12(a) to 12(c).

In modifications shown in FIG. FIGs. 11(a) to 11(c), the crank rotational axis Ac and the primary rotational axis Ap are formed to be parallel to the vehicle front-rear direction. In the modification shown in FIG. 11(a), a part of the rotational force conversion mechanism 72 is provided to overlap the rotation range CW of the crank web 21a when viewed in the direction of the crank rotational axis Ac. The rotational force conversion mechanism 72 is provided not to overlap the rotation range CW of the crank web 21a when viewed in any direction orthogonal to the crank rotational axis Ac. In the modification shown in FIG. 11(b), a part of the rotational force conversion mechanism 72 is provided to overlap the rotation range CW of the crank web 21a when viewed in the direction of the crank rotational axis Ac. The rotational force conversion mechanism 72 is provided not to overlap the rotation range CW of the crank web 21a when viewed in any direction orthogonal to the crank rotational axis Ac. In the modification shown in FIG. 11(c), the rotational force conversion mechanism 72 is provided not to overlap a rotation range CW of the crank web 21a when viewed in the direction along the crank rotational axis Ac. Furthermore, a part of the rotational force conversion mechanism 72 is provided to overlap the rotation range CW of the crank web 21a when viewed in any direction orthogonal to the crank rotational axis Ac.

In the modifications shown in FIG. 11(a) to FIG. 11(c), the crank rotational axis Ac and the primary rotational axis Ap are provided to be parallel to each other. A crankshaft side power transmission gear 91 is attached to a part of the crankshaft member 21, which is to the right of the two crank webs 21a. A primary shaft side power transmission gear 92 is attached to a right end portion in the vehicle left-right direction of the primary shaft portion 41. The crankshaft side power transmission gear 91 and the primary shaft side power transmission gear 92 are engaged with each other to constitute a power transmission gear mechanism 90. In the modifications shown in FIG. 11(a) and FIG. 11(b), the primary shaft portion 41 is supported by the crankcase member 22 via a bearing 41a. The primary shaft portion 41 is supported by the gear casing 61 by a bearing 41b. In the modifications shown in FIG. 11(a) and FIG. 11(b), the number of the sealing members in each of electronically-controlled continuously variable transmission apparatuses 30g and 30h is identical to the number in the embodiment above. In the modification shown in FIG. 11(c), the primary shaft portion 41 is supported by the gear casing 61 by the bearing 41b. The primary shaft portion 41 is supported by the not-shown dry belt casing 31 via a bearing 41c. The bearing 41a and the bearing 41b are provided in the lubrication space 22c. The bearing 41c is provided in the dry space 31a. In the modification shown in FIG. 11(c), the number of sealing members included in an electronically-controlled continuously variable transmission apparatus 30i is larger by one than the number in the embodiment above, on account of the sealing member of the bearing 41c provided in the dry space 31a. In other words, in the modification shown in FIG. 11(c), the number of the sealing members in the electronically-controlled continuously variable transmission apparatus 30i is four. The number of sealing members included in each of the electronically-controlled continuously variable transmission apparatuses 30g to 30i of the modifications shown in FIGs. 11(a) to 11(c) is smaller than the number of sealing members included in the electronically-controlled continuously variable transmission apparatus 100 of JP 2007-10104 A.

In the modifications shown in FIG. 11(a) to FIG. 11(c), the crank rotational axis Ac and the primary rotational axis Ap are provided to be parallel to each other, and the crankshaft member 21 and the primary shaft portion 41 are connected to each other by the crankshaft side power transmission gear 91 or the primary shaft side power transmission gear 92. It is therefore possible to provide the rotational force conversion mechanism 72 around the primary shaft portion 41. Furthermore, it is possible to provide the rotational force transmission mechanism 80 between the crankshaft member 21 and the primary shaft portion 41. In other words, the rotational force conversion mechanism 72 and the rotational force transmission mechanism 80 can be provided at a location remote from the crank web 21a which is hot. The primary movable sheave 44 is provided at a location remote from the crank web 21a. The dry belt 32 wound onto the primary pulley 42 is therefore provided at a location remote from the crank web 21a. The temperature decreases away from the crank web 21a. In this way, deterioration of the dry belt 32 by heat is restrained.

With reference to FIGs. 12(a) to 12(c), the locations of the crankshaft member 21 and the primary shaft portion 41 when viewed in the vehicle left-right direction in the modifications shown in FIGs. 11(a) to 11(c) will be described. FIGs. 12(a) to 12(c) schematically show the crankshaft member 21 as a circle which includes the rotation range of the crank web 21a and is centered at the rotation center of the crankshaft member 21. Each of FIGs. 12(a) to 12(c) is a schematic diagram showing the engine main body unit 20, the crankshaft member 21, the primary pulley 42, the secondary pulley 52, and the dry belt 32. As shown in FIGs. 12(a) to 12(c), the crank rotational axis Ac and the primary rotational axis Ap are provided to be parallel to each other, and a part of the crankshaft member 21 overlaps a part of the primary pulley 42 when viewed in the vehicle left-right direction.

In a modification shown in FIG. 12(a), the crank rotational axis Ac and the primary rotational axis Ap are provided to be parallel to each other and to be lined up in the vehicle front-rear direction. As indicted by a full line and a one-dot chain line in FIG. 12(b), the crank rotational axis Ac and the primary rotational axis Ap are provided to be parallel to each other and to be lined up in the vehicle up-down direction. As indicted by a one-dot chain line in FIG. 12(c), the crank rotational axis Ac and the primary rotational axis Ap are provided to be parallel to each other and to be lined up in the vehicle front-rear direction and the vehicle up-down direction.

While in the embodiment above the rotating member of the rotational force conversion mechanism is arranged not to be movable in the direction of the primary rotational axis, the disclosure is not limited to this arrangement. The rotating member of the rotational force conversion mechanism may be arranged to be movable in the direction of the primary rotational axis.

While in the embodiment above the relative moving member and the rotating member of the rotational force conversion mechanism are trapezoidal threads, the disclosure is not limited to this arrangement. Another screw structure may be used for the relative moving member and the rotating member. For example, the relative moving member and the rotating member may be formed by a ball screw and a ball screw shaft engaged with the ball screw. Alternatively, the relative moving member and the rotating member may be formed by a spline shaft having a helical spline groove and a spline nut engaged with the spline groove.

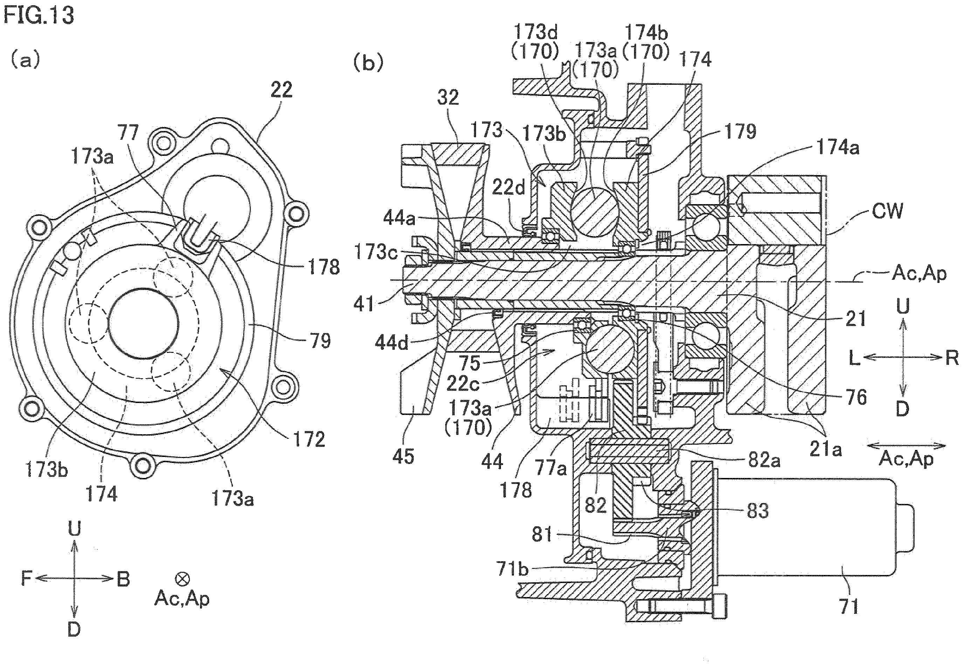

In addition to the above, as the rotational force conversion mechanism, a cam mechanism formed of a cam and a cam follower in contact with the cam may be provided instead of the cam which is the relative moving member and the rotating member. The following will describe a modification in which the rotational force conversion mechanism is the cam mechanism, with reference to FIG. 13. It is noted that items identical with those in the embodiment above are indicated by the same reference numerals, and explanations thereof are omitted. A rotational force conversion mechanism 172 includes a cam 174 and a cam follower 173 in contact with the cam 174. The cam 174 is equivalent to the rotating member of the present invention. The cam follower 173 is equivalent to the relative moving member of the present invention. The cam follower 173 includes spherical members 173a and a driven member 173b. The cam 174 is formed to be cylindrical and has at its center a hollow portion 174a into which the primary shaft portion 41 is inserted. In the cam 174, a rotating member bearing 76 is provided on the inner circumference of the hollow portion 174a. The rotating member bearing 76 is attached to the outer circumference of the primary shaft portion 41. The cam 174 further includes a sheave-side gear 179. This arrangement allows the cam 174 to be rotatable. A groove portion 174b with which the spherical members 173a are rotatably engaged is formed in a surface of the cam 174, which opposes the later-described driven member 173b in the direction of the primary rotational axis Ap. The groove portion 174b is formed to be circular in shape. The depth of the groove portion 174b is arranged to be varied in accordance with the angle in the circumferential direction of the surface of the cam 174, which opposes the driven member 173b. The driven member 173b is formed to be cylindrical and has at its center a hollow portion 173c into which the primary shaft portion 41 is inserted. A moving member bearing 75 is provided at the inner circumference of the hollow portion 173c. The moving member bearing 75 is attached to the outer circumference of the primary shaft portion 41. The driven member 173b includes a rotation stopper 77a. The rotation stopper 77a is inserted into a convex portion 178. The convex portion 178 is formed on the crankcase member 22. This arrangement prevents the driven member 173b from rotating. A groove portion 173d with which the spherical members 173a are rotatably engaged is formed in a surface of the driven member 173b, which opposes the cam 174 in the direction of the primary rotational axis Ap. The groove portion 173d is formed to be circular in shape. The depth of the groove portion 173d is arranged to be varied in accordance with the angle in the circumferential direction of the surface of the driven member 173b, which opposes the cam 174. The spherical members 173a, the groove portion 174b, and the groove portion 173d constitute the conversion contact portion 170 of the present invention. The rotational force conversion mechanism 172 including the conversion contact portion 170 is exposed to the lubrication space 22c.

The sheave-side gear 179 is rotatable by a rotational force transmitted from the rotational force transmission mechanism 80. With this, the cam 174 is rotatable by a rotational force transmitted from the rotational force transmission mechanism 80. As a result, the depth of the groove portion 174b of the cam 174 is varied and the spherical members 173a roll. Meanwhile, the driven member 173b is arranged not to be rotatable. The driven member 173b therefore moves in the direction of the primary rotational axis Ap. To put it differently, the cam follower 173 is arranged to be movable relative to the cam 174 in the direction along the primary rotational axis Ap, on account of the rotational force of the cam 174. As the cam follower 173 moves in the direction of the primary rotational axis Ap, the primary movable sheave 44 connected to the slide member 44a moves in the direction of its rotational axis Ap. The direction in which the cam follower 173 moves along the rotational axis Ap is switched by whether the rotational direction of the cam 174 is a positive rotation or a reverse rotation.

When the rotational force conversion mechanism is a cam mechanism, the mechanism may be formed of a cylindrical cam having a groove portion and a cam follower inserted into the groove portion. In this case, the cam is equivalent to the rotating member of the present invention and the cam follower is equivalent to the relative moving member of the present invention.

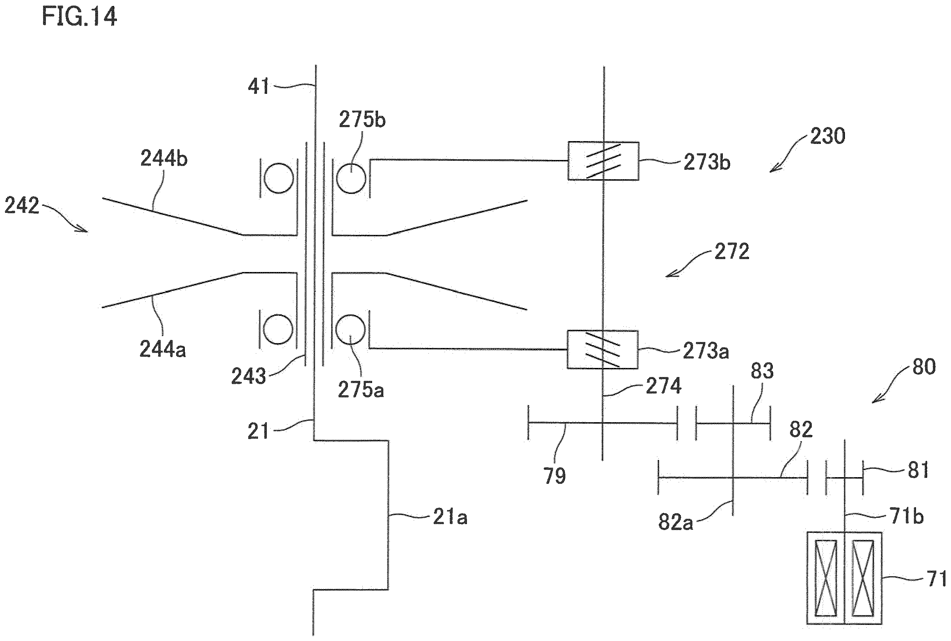

While in the embodiment above the primary pulley includes one primary movable sheave and one primary fixed sheave, the disclosure is not limited to this arrangement. The primary pulley may include two primary movable sheaves. The following will describe a modification of the electronically-controlled continuously variable transmission apparatus in which the primary pulley includes two primary movable sheaves, with reference to FIG. 14. It is noted that items identical with those in the embodiment above are indicated by the same reference numerals, and explanations thereof are omitted. An electronically-controlled continuously variable transmission apparatus 230 includes a continuously variable transmission 240, a rotational force transmission mechanism 80, and a rotational force conversion mechanism 272.

Because the continuously variable transmission 240 is identical with the continuously variable transmission 40 of the embodiment above except the primary pulley, the following explanation will focus on the primary pulley. The primary pulley 242 is attached to the primary shaft portion 41. The primary pulley 242 includes primary movable sheaves 244a and 244b and an unillustrated collar member. The collar member 243 is cylindrical in shape. The collar member 243 is fastened to the primary shaft portion 41. The collar member 243 rotates together with the crankshaft member 21 and the primary shaft portion 41. A slit (not illustrated) is formed in the outer circumferential surface of the collar member 243 along the left-right direction of the rotational axis of the primary movable sheaves 244a and 244b. Each of the primary movable sheaves 244a and 244b has a spline (not illustrated), The spline is inserted into a slit of the collar member 243, The spline is arranged to be movable in the direction of the primary rotational axis Ap, along the slit. With this arrangement, the primary movable sheaves 244a and 244b are movable in the rotational axis direction of the primary movable sheaves 244a and 244b, along the slit of the collar member 243. Meanwhile, the spline is arranged to be immovable in the slit in the rotational direction of the primary movable sheaves 244a and 244b. As a result, the primary movable sheaves 244a and 244b are arranged to rotate together with the crankshaft member 21 and the primary shaft portion 41.

A rotational force conversion mechanism 272 includes relative moving members 273a and 273b and a rotating member 274. The rotational force conversion mechanism 272 is configured to move the primary movable sheaves 244a and 244b in the direction along the rotational axis direction of the primary movable sheaves 244a and 244b. The rotating member 274 is a shaft portion of the sheave-side gear 79. The rotating member 274 is rotatable by the rotational force of the sheave-side gear 79. The sheave-side gear 79 is rotatable by a rotational force transmitted from the rotational force transmission mechanism 80. The relative moving members 273a and 273b are in contact with the rotating member 274. The relative moving members 273a and 273b and the rotating member 274 constitute, for example, a screw mechanism. The relative moving members 273a and 273b are arranged to be movable relative to the rotating member 274 in the direction along the rotational axis direction of the primary movable sheaves 244a and 244b, on account of the rotational force of the rotating member 274. The relative moving members 273a and 273b are arranged so that the width of the primary pulley 244 varies.

In the embodiment above, the rotational shaft of the electric motor is not supported by a bearing at an end portion. Alternatively, in the engine unit of the present invention, the rotational shaft of the electric motor may be supported by a bearing at an end portion. When the rotational shaft of the electric motor is provided in the dry space, the bearing which supports the rotational shaft of the electric motor is provided with one sealing member. The sealing member of the bearing of the rotational shaft is in contact with the bearing of the rotational shaft. The rotational shaft of the bearing rotates in accordance with the rotation of the electric motor at the time of shifting. In other words, resistance due to rotation occurs on the sealing member of the bearing of the rotational shaft only at the time of shifting. The bearing of the rotational shaft may not be provided with a sealing member. For example, the bearing of the rotational shaft may be exposed to a lubrication space surrounded by the dry belt casing, and a single sealing member may be provided between the dry belt casing and the rotational shaft.

In the embodiment above, the moving distance detection unit is a rotation number sensor which is configured to detect the moving distance of the primary movable sheave in the rotational axis direction as a result of the rotation of the primary movable sheave upon making contact with the relative moving member. Alternatively, the moving distance detection unit may be another sensor which is configured to detect the moving distance of the primary movable sheave in its rotational axis direction. For example, the moving distance detection unit may be formed by combining gears, and the moving distance of the primary movable sheave in its rotational axis direction may be detected based on a rotation amount of the gears.

While in the embodiment above the engine main body unit is mounted on the vehicle body frame with the cylinder axial line significantly leaning forward, the disclosure is not limited to this arrangement. As shown in FIG. 12(c), the engine main body unit may be mounted on the vehicle body frame, with the cylinder axial line being close to the up-down direction line. The inclination angle of the cylinder axial line with respect to the horizontal direction is 45 degree or more and 90 degrees or less.

The main body unit of the engine unit of the present invention may be a multi-cylinder engine. The engine main body unit of the engine unit of the present invention may be a two-stroke engine. The engine main body unit of the engine unit of the present invention may be a natural air-cooled engine. The engine main body unit of the engine unit of the present invention may be a water-cooled engine.

The motorcycle has been described as an example of a vehicle which employs the engine unit of the present invention. The vehicle of the present invention may be any type of vehicles as long as they are driven by power from an engine unit. The vehicle of the present invention may be a straddled vehicle which is not a motorcycle. A straddled vehicle indicates all types of vehicles on which a rider rides in a manner of straddling a saddle. A straddled vehicle includes motorcycles, tricycles, four-wheeled buggies (ATVs: All Terrain Vehicles), personal water crafts, snowmobiles, and the like. The vehicle of the present invention may be a non-straddled vehicle. No rider may ride the vehicle of the present invention. Furthermore, the vehicle of the present invention may run without any rider or passenger. In these cases, the forward direction of the vehicle indicates the direction in which the leaning vehicle advances.

### [Reference Signs List]

- 6: engine unit
- 20: engine main body unit
- 21: crankshaft member
- 21a: crank web
- 22: crankcase member
- 22c: lubrication space
- 30: electronically-controlled continuously variable transmission apparatus
- 31: dry belt casing
- 31a: dry space
- 32: dry belt
- 32a: slide portion
- 40: continuously variable transmission
- 41: primary shaft portion
- 42: primary pulley
- 44: primary movable sheave
- 52: secondary pulley
- 70: conversion contact portion
- 71: electric motor
- 72: rotational force conversion mechanism
- 73: relative moving member
- 74: rotating member
- 80: rotational force transmission mechanism
- 81: output gear
- 82: rotational force transmission gear
- 83: rotating member gear
- 84: rotational force transmission gear mechanism
- 85: moving distance detection unit
- 85c: cutout portion (contact portion)
- 91: crankshaft side power transmission gear
- 92: primary shaft side power transmission gear
- Ap: primary pulley rotational axis
- Ac: crank rotational axis
- CW: rotation range of crank web

## Claims

1. An engine unit (6) comprising:
an engine main body unit (20) which includes a crankcase member (22) forming a lubrication space (22c) in which lubricant is provided and a crankshaft member (21) provided in the lubrication space (22c) and including a crank web (21a); and
an electronically-controlled continuously variable transmission apparatus (30) including:
(1) a continuously variable transmission (40) including: a primary pulley (42) which is rotatable in accordance with rotation of the crankshaft member (21) and includes at least one primary movable sheave (44) movable in a rotational axis direction; a secondary pulley (52); a dry belt (32) which is wound onto the primary pulley (42) and the secondary pulley (52) and has a slide portion (32a) which is in contact with the primary pulley (42) and the secondary pulley (52) and is not lubricated by the lubricant; and a dry belt casing (31) which forms a dry space (31a) in which the primary pulley (42), the secondary pulley (52), and the dry belt (32) are provided, a primary rotational axis (Ap) which is the rotational axis of the at least one primary movable sheave (44) being on the same line as or being parallel to a crank rotational axis (Ac) which is the rotational axis of the crankshaft member (21);
(2) a rotational force transmission mechanism (80) which is configured to transmit a rotational force of an electric motor (71); and
(3) a rotational force conversion mechanism (72) configured to move the at least one primary movable sheave (44) in the direction of the primary rotational axis (Ap) and includes (a) a rotating member (74) which is rotatable by the rotational force transmitted from the rotational force transmission mechanism (80) and (b) a relative moving member (73) which is in contact with the rotating member (74) and is movable by the rotational force of the rotating member (74) in the direction of the primary rotational axis (Ap) relative to the rotating member (74),
the rotational force conversion mechanism (72) being provided (i) at a position not overlapping a rotation range of the crank web (21a) when viewed in the direction of the crank rotational axis (Ac), and/or (ii) at a position not overlapping the rotation range of the crank web (21a) when viewed in any direction orthogonal to the direction of the crank rotational axis (Ac),
**characterized in that**
a conversion contact portion (70) where the relative moving member (73) and the rotating member (74) contact each other, is provided in the lubrication space (22c) formed by the crankcase member (22) to be exposed to the lubrication space (22c).

2. The engine unit (6) according to claim 1, wherein the rotational force conversion mechanism (72) is provided in the lubrication space (22c) formed by the crankcase member (22) to be exposed to the lubrication space (22c).

3. The engine unit (6) according to claim 1 or 2, wherein the rotational force transmission mechanism (80) includes a rotating member gear (83) which is engaged with the rotating member (74) of the rotational force conversion mechanism (72) and is rotatable by the rotational force of the electric motor (71), and
the rotating member gear (83) is provided in the lubrication space (22c) formed by the crankcase member (22) to be exposed to the lubrication space (22c).

4. The engine unit (6) according to claim 3, wherein the rotating member gear (83) is made of metal.

5. The engine unit (6) according to claim 3 or 4, wherein
the rotational force transmission mechanism (80) includes a rotational force transmission gear mechanism (84) which includes at least one gear (82) configured to transmit the rotational force of the electric motor (71) to the rotating member gear (83), and
at least part of the at least one gear (82) included in the rotational force transmission gear mechanism (84) is provided in the lubrication space (22c) formed by the crankcase member (22) to be exposed to the lubrication space (22c).

6. The engine unit (6) according to claim 5, wherein the at least part of the at least one gear (82) included in the rotational force transmission gear mechanism (84) is made of metal.

7. The engine unit (6) according to claim 1 or 2, wherein the rotational force transmission mechanism (80) is provided in the lubrication space (22c) formed by the crankcase member (22) to be exposed to the lubrication space (22c).

8. The engine unit (6) according to any one of claims 1 to 7, wherein
the primary rotational axis (Ap) of the at least one primary movable sheave (44) is provided on the same line as the crank rotational axis (Ac) of the crankshaft member (21), and
a primary shaft portion (41) to which the at least one primary movable sheave (44) is attached is integrated with the crankshaft member (21).

9. The engine unit (6) according to any one of claims 1 to 7, wherein
the primary rotational axis (Ap) of the at least one primary movable sheave (44) is provided to be parallel to the crank rotational axis (Ac) of the crankshaft member (21), and
a primary shaft portion (41) to which the at least one primary movable sheave (44) is attached is connected to the crankshaft member (21) by a power transmission gear (91, 92).

10. The engine unit (6) according to any one of claims 1 to 9, further comprising
a moving distance detection unit (85) which includes a contact portion (85c) in contact with the rotational force conversion mechanism (72) and is configured to detect a moving distance of the relative moving member (73) in the direction of the primary rotational axis (Ap) relative to the rotating member (74),
at least the contact portion (85c) of the moving distance detection unit (85) being provided to be exposed to the lubrication space (22c) formed by the crankcase member (22).

11. The engine unit (6) according to any one of claims 1 to 10, wherein the rotational force conversion mechanism (72) is either a screw mechanism or a cam mechanism.

12. The engine unit (6) according to any one of claims 1 to 11, wherein the conversion contact portion (70) and the crankshaft member (21) are lubricated by shared lubricant.

13. The engine unit (6) according to claim 12, wherein the shared lubricant is oil.

## Patentansprüche

1. Eine Triebwerkseinheit (6), die folgende Merkmale aufweist:
eine Triebwerkshauptkörpereinheit (20), die ein Kurbelgehäusebauglied (22), das einen Schmierraum (22c) bildet, in dem ein Schmiermittel bereitgestellt ist, und ein Kurbelwellenbauglied (21) umfasst, das in dem Schmierraum (22c) bereitgestellt ist und eine Kurbelwange (21a) umfasst; und
eine elektronisch gesteuerte kontinuierlich variable Übertragungsvorrichtung (30), die Folgendes umfasst:
(1) eine kontinuierlich variable Übertragung (40), die Folgendes umfasst: eine primäre Rolle (42), die gemäß einer Drehung des Kurbelwellenbauglieds (21) drehbar ist und zumindest eine primäre bewegbare Antriebsscheibe (44) umfasst, die in einer Drehachsenrichtung bewegbar ist; eine sekundäre Rolle (52); einen Trockenriemen (32), der auf die primäre Rolle (42) und die sekundäre Rolle (52) gewickelt ist und einen Gleitabschnitt (32a) aufweist, der mit der primären Rolle (42) und der sekundären Rolle (52) in Kontakt ist und nicht durch das Schmiermittel geschmiert ist; und ein Trockenriemengehäuse (31), das einen Trockenraum (31a) bildet, in dem die primäre Rolle (42), die sekundäre Rolle (52) und der Trockenriemen (32) bereitgestellt sind, wobei eine primäre Drehachse (Ap), die die Drehachse der zumindest einen primären bewegbaren Antriebsscheibe (44) ist, sich auf derselben Linie wie eine Kurbeldrehachse (Ac), die die Drehachse des Kurbelwellenbauglieds (21) ist, befindet oder parallel zu derselben ist;
(2) einen Drehkraftübertragungsmechanismus (80), der dazu konfiguriert ist, eine Drehkraft eines elektrischen Motors (71) zu übertragen; und
(3) einen Drehkraftumwandlungsmechanismus (72), der dazu konfiguriert ist, die zumindest eine primäre bewegbare Antriebsscheibe (44) in Richtung der primären Drehachse (Ap) zu bewegen, und der Folgendes umfasst: (a) ein Drehbauglied (74), das durch die Drehkraft, die von dem Drehkraftübertragungsmechanismus (80) übertragen wird, gedreht werden kann, und (b) ein Relativbewegungsbauglied (73), das mit dem Drehbauglied (74) in Kontakt ist und durch die Drehkraft des Drehbauglieds (74) in Richtung der primären Drehachse (Ap) relativ zu dem Drehbauglied (74) bewegt werden kann,
wobei der Drehkraftumwandlungsmechanismus (72) wie folgt bereitgestellt ist: (i) an einer Position, die bei Betrachtung in Richtung der Kurbeldrehachse (Ac) einen Drehbereich der Kurbelwange (21a) nicht überlappt, und/oder (ii): an einer Position, die bei Betrachtung in einer beliebigen Richtung, die senkrecht zu der Richtung der Kurbeldrehrichtung (Ac) ist, den Drehbereich der Kurbelwange (21a) nicht überlappt,
**dadurch gekennzeichnet, dass**
ein Umwandlungskontaktabschnitt (70), in dem das Relativbewegungsbauglied (73) und das Drehbauglied (74) in Kontakt miteinander sind, in dem durch das Kurbelgehäusebauglied (22) gebildeten Schmierraum (22c) so bereitgestellt ist, dass derselbe zu dem Schmierraum (22c) hin freiliegend ist.

2. Die Triebwerkseinheit (6) gemäß Anspruch 1, bei der der Drehkraftumwandlungsmechanismus (72) in dem durch das Kurbelgehäusebauglied (22) gebildeten Schmierraum (22c) so bereitgestellt ist, dass derselbe zu dem Schmierraum (22c) hin freiliegend ist.

3. Die Triebwerkseinheit (6) gemäß Anspruch 1 oder 2, bei der der Drehkraftübertragungsmechanismus (80) ein Drehbaugliedgetriebe (83) umfasst, das mit dem Drehbauglied (74) des Drehkraftumwandlungsmechanismus (72) in Eingriff steht und durch die Drehkraft des elektrischen Motors (71) gedreht werden kann, und das Drehbaugliedgetriebe (83) in dem durch das Kurbelgehäusebauglied (22) gebildeten Schmierraum (22c) so bereitgestellt ist, dass dasselbe zu dem Schmierraum (22c) hin freiliegend ist.

4. Die Triebwerkseinheit (6) gemäß Anspruch 3, bei der das Drehbaugliedgetriebe (83) aus Metall hergestellt ist.

5. Die Triebwerkseinheit (6) gemäß Anspruch 3 oder 4, wobei
der Drehkraftübertragungsmechanismus (80) einen Drehkraftübertragungsgetriebemechanismus (84) umfasst, der zumindest ein Getriebe (82) umfasst, das dazu konfiguriert ist, die Drehkraft des elektrischen Motors (71) an das Drehbaugliedgetriebe (83) zu übertragen, und
zumindest ein Teil des zumindest einen Getriebes (82), das in dem Drehkraftübertragungsgetriebemechanismus (84) beinhaltet ist, in dem durch das Kurbelgehäusebauglied (22) gebildeten Schmierraum (22c) so bereitgestellt ist, dass derselbe zu dem Schmierraum (22c) hin freiliegend ist.

6. Die Triebwerkseinheit (6) gemäß Anspruch 5, bei der der zumindest eine Teil des zumindest einen Getriebes (82); das in dem Drehkraftübertragungsgetriebemechanismus (84) beinhaltet ist, aus Metall hergestellt ist.

7. Die Triebwerkseinheit (6) gemäß Anspruch 1 oder 2, bei der der Drehkraftübertragungsmechanismus (80) in dem durch das Kurbelgehäusebauglied (22) gebildeten Schmierraum (22c) so bereitgestellt ist, dass derselbe zu dem Schmierraum (22c) hin freiliegend ist.

8. Die Triebwerkseinheit (6) gemäß einem der Ansprüche 1 bis 7, bei der
die primäre Drehachse (Ap) der zumindest einen primären bewegbaren Antriebsscheibe (44) auf derselben Linie wie die Kurbeldrehachse (Ac) des Kurbelwellenbauglieds (21) bereitgestellt ist und
ein primärer Wellenabschnitt (41), an dem die zumindest eine primäre bewegbare Antriebsscheibe (44) angebracht ist, mit dem Kurbelwellenbauglied (21) integriert ist.

9. Die Triebwerkseinheit (6) gemäß einem der Ansprüche 1 bis 7, bei der die primäre Drehachse (Ap) der zumindest einen primären bewegbaren Antriebsscheibe (44) so bereitgestellt ist, dass dieselbe parallel zu der Kurbeldrehachse (Ac) des Kurbelwellenbauglieds (21) ist, und
ein primärer Wellenabschnitt (41), an dem die zumindest eine primäre bewegbare Antriebsscheibe (44) angebracht ist, mit dem Kurbelwellenbauglied (21) durch ein Leistungsübertragungsgetriebe (91, 92) verbunden ist.

10. Die Triebwerkseinheit (6) gemäß einem der Ansprüche 1 bis 9, die ferner folgende Merkmale aufweist:
eine Bewegungsabstandserfassungseinheit (85), die einen Kontaktabschnitt (85c) umfasst, der mit dem Drehkraftumwandlungsmechanismus (72) in Kontakt ist und dazu konfiguriert ist, einen Bewegungsabstand des Relativbewegungsbauglieds (73) in Richtung der primären Drehachse (Ap) relativ zu dem Drehbauglied (74) zu erfassen,
wobei zumindest der Kontaktabschnitt (85c) der Bewegungsabstandserfassungseinheit (85) so bereitgestellt ist, dass derselbe zu dem durch das Kurbelgehäusebauglied (22) gebildeten Schmierraum (22c) hin freiliegend ist.

11. Die Triebwerkseinheit (6) gemäß einem der Ansprüche 1 bis 10, bei der der Drehkraftumwandlungsmechanismus (72) entweder ein Schraubmechanismus oder ein Nockenmechanismus ist.

12. Die Triebwerkseinheit (6) gemäß einem der Ansprüche 1 bis 11, bei der der Umwandlungskontaktabschnitt (70) und das Kurbelwellenbauglied (21) durch ein gemeinschaftlich verwendetes Schmiermittel geschmiert sind.

13. Die Triebwerkseinheit (6) gemäß Anspruch 12, bei der das gemeinschaftlich verwendete Schmiermittel Öl ist.

## Revendications

1. Unité de moteur (6) comprenant:
une unité de corps principal de moteur (20) qui comporte un élément de carter (22) formant un espace de lubrification (22c) dans lequel est prévu du lubrifiant et un élément de vilebrequin (21) est prévu dans l'espace de lubrification (22c) et comporte une bras de vilebrequin (21a); et
un appareil de transmission à variation continue à commande électronique (30) comportant:
(1) une transmission à variation continue (40) comportant: une poulie primaire (42) qui peut tourner selon la rotation de l'élément de vilebrequin (21) et qui comporte au moins une poulie mobile primaire (44) déplaçable dans une direction d'axe de rotation; une poulie secondaire (52); une courroie sèche (32) qui est enroulée sur la poulie primaire (42) et la poulie secondaire (52) et présente une partie coulissante (32a) qui est en contact avec la poulie primaire (42) et la poulie secondaire (52) et n'est pas lubrifiée par le lubrifiant; et un carter de courroie sèche (31) qui forme un espace sec (31a) dans lequel sont prévues la poulie primaire (42), la poulie secondaire (52) et la courroie sèche (32), un axe de rotation primaire (Ap), qui est l'axe de rotation de l'au moins une poulie mobile primaire (44), se trouvant sur la même ligne que ou étant parallèle à un axe de rotation de vilebrequin (Ac), qui est l'axe de rotation de l'élément de vilebrequin (21);
(2) un mécanisme de transmission de force de rotation (80) qui est configuré pour transmettre une force de rotation d'un moteur électrique (71); et
(3) un mécanisme de conversion de force de rotation (72) configuré pour déplacer l'au moins une poulie mobile primaire (44) dans la direction de l'axe de rotation primaire (Ap) et qui comporte (a) un élément rotatif (74) qui peut tourner par la force de rotation transmise par le mécanisme de transmission de force de rotation (80) et (b) un élément à déplacement relatif (73) qui est en contact avec l'élément rotatif (74) et peut être déplacé par la force de rotation de l'élément rotatif (74) dans la direction de l'axe de rotation primaire (Ap) par rapport à l'élément rotatif (74),
le mécanisme de conversion de force de rotation (72) étant prévu (i) à une position ne venant pas en chevauchement avec une plage de rotation du bras de vilebrequin (21a) lorsque vu dans la direction de l'axe de rotation de vilebrequin (Ac), et/ou (ii) à une position ne venant pas en chevauchement avec la plage de rotation du bras de vilebrequin (21a) lorsque vu dans une direction orthogonale à la direction de l'axe de rotation de vilebrequin (Ac),
**caractérisée par le fait que**
une partie de contact de conversion (70), où l'élément à déplacement relatif (73) et l'élément rotatif (74) entrent en contact l'un avec l'autre, est prévue dans l'espace de lubrification (22c) formé par l'élément de carter (22) de manière à être exposée à l'espace de lubrification (22c).

2. Unité de moteur (6) selon la revendication 1, dans laquelle le mécanisme de conversion de force de rotation (72) est prévu dans l'espace de lubrification (22c) formé par l'élément de carter (22) de manière à être exposé à l'espace de lubrification (22c).

3. Unité de moteur (6) selon la revendication 1 ou 2, dans laquelle le mécanisme de transmission de force de rotation (80) comporte un engrenage d'élément rotatif (83) qui est en prise avec l'élément rotatif (74) du mécanisme de conversion de force de rotation (72) et peut tourner par la force de rotation du moteur électrique (71), et
l'engrenage d'élément rotatif (83) est prévu dans l'espace de lubrification (22c) formé par l'élément de carter (22) de manière à être exposé à l'espace de lubrification (22c).

4. Unité de moteur (6) selon la revendication 3, dans laquelle l'engrenage d'élément rotatif (83) est réalisé en métal.

5. Unité de moteur (6) selon la revendication 3 ou 4, dans laquelle
le mécanisme de transmission de force de rotation (80) comporte un mécanisme d'engrenage de transmission de force de rotation (84) qui comporte au moins un engrenage (82) configuré pour transmettre la force de rotation du moteur électrique (71) à l'engrenage d'élément rotatif (83), et
au moins une partie de l'au moins un engrenage (82) incluse dans le mécanisme d'engrenage de transmission de force de rotation (84) est prévue dans l'espace de lubrification (22c) formé par l'élément de carter (22) de manière à être exposée à l'espace de lubrification (22c).

6. Unité de moteur (6) selon la revendication 5, dans laquelle l'au moins une partie de l'au moins un engrenage (82) incluse dans le mécanisme d'engrenage de transmission de force de rotation (84) est réalisée en métal.

7. Unité de moteur (6) selon la revendication 1 ou 2, dans laquelle le mécanisme de transmission de force de rotation (80) est prévu dans l'espace de lubrification (22c) formé par l'élément de carter (22) de manière à être exposé à l'espace de lubrification (22c).

8. Unité de moteur (6) selon l'une quelconque des revendications 1 à 7, dans laquelle
l'axe de rotation primaire (Ap) de l'au moins une poulie mobile primaire (44) est prévu sur la même ligne que l'axe de rotation de vilebrequin (Ac) de l'élément de vilebrequin (21), et
une partie d'arbre primaire (41) à laquelle est fixée l'au moins une poulie mobile primaire (44) est intégrée à l'élément de vilebrequin (21).

9. Unité de moteur (6) selon l'une quelconque des revendications 1 à 7, dans laquelle
l'axe de rotation primaire (Ap) de l'au moins une poulie mobile primaire (44) est prévu de manière à être parallèle à l'axe de rotation de vilebrequin (Ac) de l'élément de vilebrequin (21), et
une partie d'arbre primaire (41) à laquelle est fixée l'au moins une poulie mobile primaire (44) est fixée à l'élément de vilebrequin (21) par un engrenage de transmission de puissance (91, 92).

10. Unité de moteur (6) selon l'une quelconque des revendications 1 à 9, comprenant par ailleurs
une unité de détection de distance de déplacement (85) qui comporte une partie de contact (85c) en contact avec le mécanisme de conversion de force de rotation (72) et est configurée pour détecter une distance de déplacement de l'élément à déplacement relatif (73) dans la direction de l'axe de rotation primaire (Ap) par rapport à l'élément rotatif (74),
au moins la partie de contact (85c) de l'unité de détection de distance de déplacement (85) étant prévue de manière à être exposée à l'espace de lubrification (22c) formé par l'élément de carter (22).

11. Unité de moteur (6) selon l'une quelconque des revendications 1 à 10, dans laquelle le mécanisme de conversion de force de rotation (72) est soit un mécanisme à vis, soit un mécanisme à came.

12. Unité de moteur (6) selon l'une quelconque des revendications 1 à 11, dans laquelle la partie de contact de conversion (70) et l'élément de vilebrequin (21) sont lubrifiés par un lubrifiant partagé.

13. Unité de moteur (6) selon la revendication 12, dans laquelle le lubrifiant partagé est de l'huile.
